# EUROPÄISCHE PATENTSCHRIFT

(11) **EP 3 483 052 B1**
(45) Veröffentlichungstag und Bekanntmachung des Hinweises auf die Patenterteilung: **09.03.2022**
(21) Anmeldenummer: 18000917.7
(22) Anmeldetag: 13.05.2016
(51) Int. Cl.: B62M 9/10, F16H 55/30

(54) **EINZELKETTENRAD FÜR EINE FAHRRADVORDERKURBELANORDNUNG**
SINGLE CHAIN WHEEL FOR A BICYCLE FRONT CRANK ASSEMBLY
PIGNON SIMPLE POUR UN DISPOSITIF DE MANIVELLE AVANT DE BICYCLETTE

(30) Priorität: 03.07.2015 DE 102015008662
(43) Veröffentlichungstag der Anmeldung: 15.05.2019
(62) Teilanmeldung aus: 16001104.5
(73) Patentinhaber: SRAM Deutschland GmbH, 97424 Schweinfurt (DE)
(72) Erfinder: Reiter, Markus, 97422 Schweinfurt (DE); Hanke, Joachim, 97464 Niederwerrn (DE); Johnson, Bryn, San Luis Obispo, CA 93401 (US); Braedt, Henrik, 97456 Dittelbrunn/OT Hambach (DE); Vonend, Andreas, 97421 Schweinfurt (DE); Kehrer, Martin, 97422 Schweinfurt (DE); Nunes dos Santos, Pedro Miguel, 3040-087 Santa Clara Coimbra (PT); Figueiredo, Luis, Bairro Santa Apolónia (PT); Antunes, Rodrigo, 3030-333 Coimbra (PT)

(56) Entgegenhaltungen:
- EP-A1- 0 522 984
- CN-U- 203 698 578
- DE-A1-102012 023 819
- JP-U- S5 642 489
- US-A- 2 259 937

## Beschreibung

Die vorliegende Erfindung betrifft ein Einzelkettenrad für eine Fahrradvorderkurbelanordnung zum Eingreifen in eine Antriebskette, das eine an einem Umfang des Einzelkettenrads ausgebildete Vielzahl von Zähnen umfasst, die eine erste und eine zweite Zahngruppe aufweist. Die Zähne der zweiten Zahngruppe sind alternierend zwischen den Zähnen der ersten Zahngruppe angeordnet, so dass in Umfangsrichtung des Einzelkettenrads betrachtet auf einen Zahn der ersten Zahngruppe unmittelbar ein Zahn der zweiten Zahngruppe und darauf wiederum unmittelbar ein Zahn der ersten Zahngruppe folgt. Die Zähne der ersten Zahngruppe weisen in Richtung quer zur Umfangsrichtung des Einzelkettenrads betrachtet eine größere Materialstärke als die Zähne der zweiten Zahngruppe auf. Jeder Zahn weist eine Lastflanke auf, über die eine Kraftübertragung zwischen einer daran anliegenden Kettenrolle der Antriebskette und dem jeweiligen Zahn erfolgen kann. Jeder Zahn der ersten Zahngruppe weist wenigstens eine Profilierung mit einer flankennahen Aussparung auf, in die ein über die Kettenrolle hinausstehender Abschnitt einer Innenlasche der Antriebskette eingreifen kann. Die Lastflanke und die Profilierung wenigstens eines Zahns der ersten Zahngruppe sind geometrisch derart gestaltet und zueinander angeordnet, dass auch bei verschleißinvolvierender Beanspruchung der Lastflanke infolge der Kraftübertragung über die Kettenrollen der Antriebskette im Betrieb des Einzelkettenrades ein ungehindertes Außereingriffgelangen der jeweiligen an der Lastflanke anliegenden Kettenrolle und dem Zahn gewährleistet ist. Die Zähne der zweiten Zahngruppe sind in radialer Richtung des Einzelkettenrads mit geringerer Höhe ausgebildet als die Zähne der ersten Zahngruppe, wobei die Zähne der zweiten Zahngruppe eine Höhe von etwa 85 % der Höhe der Zähne der ersten Zahngruppe aufweisen.

Bei Fahrrädern mit einem kettengetriebenen Antriebsstrang, die ein Einzelkettenrad an der Vorderkurbelanordnung aufweisen, wird die Antriebskette über dieses Einzelkettenrad angetrieben. Dazu greift das Einzelkettenrad beim Antreiben abschnittsweise mit seinen Zähnen in die Antriebskette ein und wirkt in bekannter Weise mit dieser zusammen. Der Vorteil einer Fahrradvorderkurbelanordnung mit einem Einzelkettenrad gegenüber einer Vorderkurbelanordnung mit mehreren Kettenrädern besteht darin, dass weniger Komponenten verbaut werden. Beispielsweise kann bei einer solchen Anordnung auf weitere Kettenräder an der Vorderkurbelanordnung sowie auf einen Umwerfer verzichtet werden. Eine geringere Anzahl an Komponenten sowie eine damit verbundene Reduktion der Schaltvorgänge führt gleichzeitig zu einer geringeren Schaltfehleranfälligkeit einer solchen Anordnung.

Damit verzichten derartige Anordnungen jedoch gleichzeitig auch auf Sicherungskomponenten, die die Antriebskette auf dem Einzelkettenrad sichern und die Kette daran hindern, unter Last radial nach außen über die in Eingriff stehenden Zähne zu springen. Aus diesem Grund wird versucht bei Einzelkettenrädern die Zähne derart auszubilden, dass die Geometrie der Zähne ein Ab- oder Überspringen der Kette verhindert. Dazu weisen die Zähne von Einzelkettenrädern in der Regel möglichst steile Lastflanken auf.

Ein Einzelkettenrad für eine Fahrradvorderkurbelanordnung ist beispielsweise aus der gattungsgemäßen deutschen Offenlegungsschrift DE 10 2012 023 819 A1 bekannt. Das Dokument beschreibt ein Einzelkettenrad zum Eingreifen in eine Antriebskette, das eine Vielzahl von Zähnen umfasst. Die Vielzahl von Zähnen weist eine erste Zahngruppe und eine zweite Zahngruppe auf, die alternierend zwischen der ersten Zahngruppe angeordnet ist. Die beiden Zahngruppen sind dabei in Bezug auf die entsprechenden Kettenzwischenräume der Antriebskette mit unterschiedlicher Materialstärke ausgebildet, um ein sicheres Eingreifen der Zähne des Einzelkettenrads in die Antriebskette zu ermöglichen. Wie zuvor bereits beschrieben, weist auch diese Anordnung Zähne mit relativ steilen Lastflanken auf, um die Kette daran zu hindern, unter Last nach außen über die Zähne zu springen.

Ein Nachteil derart ausgebildeter Zähne mit steilen Lastflanken besteht insbesondere darin, dass über die Lebensdauer des Kettenrades durch die Kettenrollen der Antriebskette ein verschleißbedingter Materialabtrag in den Lastflanken in einem Bereich der stärksten Belastung verursacht wird. Mit anderen Worten gräbt sich die Kettenrolle mit der Dauer der Belastung immer weiter in die jeweiligen Lastflanken ein. Als Folge daraus entstehen in den Lastflanken der Zähne Kanten, die das Auslaufen der Antriebskette bzw. der Kettenrollen hemmen und/oder blockieren können. In diesem Fall spricht man von auftretendem *"Chainsuck".*

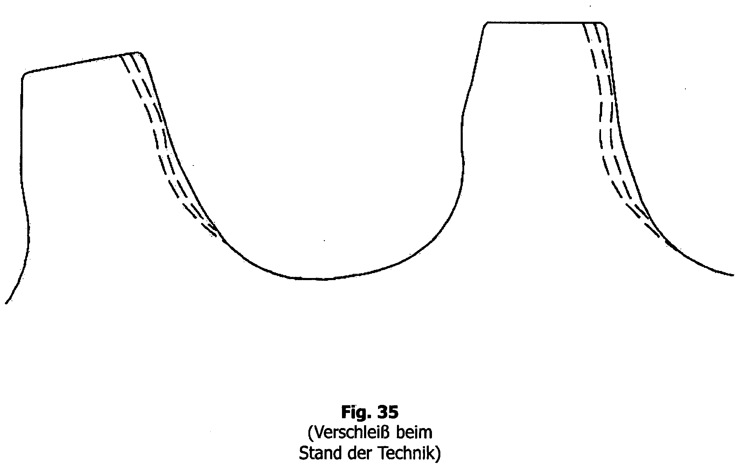

Fig. 35 zeigt beispielhaft mit Strichlinien verschiedene Zustände des kontinuierlichen Materialabtrags an den Lastflanken der Zähne bekannter Einzelkettenräder, ausgehend von einem mit durchgezogener Linie gezeigten Anfangszustand. Dabei wird die Entstehung einer Kante mit der Dauer der Belastung sichtbar, die wie zuvor beschrieben ein Hindernis für die jeweilige Kettenrolle darstellt und damit den Auslauf der Antriebskette hemmt.

Dieser negative Effekt tritt insbesondere bei Fahrradvorderkurbelanordnungen mit Einzelkettenrädern auf. Diese werden vergleichsweise stärker belastet als die jeweiligen Kettenräder einer Vorderkurbelanordnung mit einer Mehrfachkettenradanordnung, da die Kette im Betrieb dauerhaft mit ein und demselben Kettenrad der Vorderkurbelanordnung zusammenwirkt.

Die CN 203698578 U zeigt ein Kettenrad mit drei Gruppen von Zähnen unterschiedlicher Materialstärke, wobei die Zähne der dritten Gruppe eine sehr geringe Höhe aufweisen und dem Ausgleich von Fertigungstoleranzen dienen.

Es liegt daher die Aufgabe zugrunde, ein Einzelkettenrad für eine Fahrradvorderkurbelanordnung bereitzustellen, bei dem ein Materialabtrag in den Lastflanken der Zähne durch die daran angreifenden Kettenrollen der Antriebskette nicht zu einem Blockieren der Antriebskette führt, sodass ein im Wesentlichen ungehemmtes Auslaufen der Antriebskette auch noch nach längerem Betrieb unter Verschleiß möglich ist. Dabei soll auch verhindert werden, dass die in Eingriff stehenden Kettenrollen unter Belastung bezüglich einer zentralen Achse des Kettenrads radial nach außen über die in Eingriff stehenden Zähne springen.

Diese Aufgabe wird gelöst durch ein Einzelkettenrad mit den Merkmalen des Anspruchs 1. Bevorzugte Ausführungsformen werden aus den Unteransprüchen ersichtlich.

Die folgenden Ausführungsformen dienen lediglich der Veranschaulichung.

Die Lastflanke und die Profilierung wenigstens eines Zahns, vorzugsweise einer Vielzahl oder aller Zähne, der ersten Zahngruppe des Einzelkettenrads sind geometrisch derart gestaltet und zueinander angeordnet, dass auch bei verschleißinvolvierender Beanspruchung der Lastflanke infolge der Kraftübertragung über die Kettenrollen im Betrieb des Einzelkettenrades ein ungehindertes Außereingriffgelangen der jeweiligen an der Lastflanke anliegenden Kettenrolle und dem Zahn gewährleistet ist. Es versteht sich, dass während des Betriebs immer nur ein bestimmter Teil der Vielzahl an Zähnen mit der Antriebskette in Eingriff steht, wobei während einer vollständigen Umdrehung des Einzelkettenrads jeder Zahn zumindest kurzzeitig mit einer Kettenrolle der Antriebskette in Wechselwirkung tritt.

Beim Zusammenwirken eines Einzelkettenrads und einer Antriebskette kann zwischen verschiedenen Phasen unterschieden werden. Diese Phasen bzw. die im Betrieb ablaufenden Vorgänge werden im Folgenden zum besseren Verständnis in kinematischer Umkehr beschrieben, d.h. in Betrachtung eines stillstehenden Einzelkettenrads und eines Lasttrums, der tangential auf das Einzelkettenrad aufgelegt wird, sowie einem Leertrum, der tangential von dem Einzelkettenrad angehoben wird:
Der Lasttrum schwenkt in einem Kettengelenk um einen letzten Kettenbolzen, dessen Kettenrolle maximal in einen Zahnzwischenraum des Einzelkettenrads eingreift, wobei an diesem Kettengelenk ein Abknicken der Antriebskette vorliegt. Der Lasttrum ist dabei solange um dieses Kettengelenk schwenkbar, bis ein im Lasttrum benachbartes Kettengelenk mit seiner Kettenrolle maximal in einen Zahnzwischenraum des Einzelkettenrads eingreift. Ab diesem Zeitpunkt schwenkt der Lasttrum um das benachbarte Kettengelenk, woraufhin sich die beschriebenen Vorgänge im Hinblick auf das nächste benachbarte in Eingriff zu bringende Kettengelenk wiederholen.

Bei diesen Vorgängen kommt es zunächst zu einem Annähern der sich tangential von dem Einzelkettenrad weg erstreckenden Antriebskette an die Zähne des Einzelkettenrads bzw. der Zähne an die Antriebskette. Anschließend taucht ein Zahnkopf einer der Zähne des Einzelkettenrads in einen Zwischenraum zwischen einem Paar von Kettenlaschen der Antriebskette ein, wodurch es zu einem Eingriff des Einzelkettenrads mit der Antriebskette kommt. Während des Eingreifens gelangen zu Beginn axiale Zahnflächen des eintauchenden Zahns in Kontakt mit einer Innenfläche einer Kettenlasche des entsprechenden Zwischenraums der Antriebskette. Die in Kontakt stehende Kettenlasche der Antriebskette gleitet an einer Schräge der axialen Zahnfläche ab, wodurch die Kettenlasche, und damit das zugehörige Kettenglied, eine axiale Versatzbewegung relativ zu dem betrachteten Zahn des Einzelkettenrads ausführt. Gleichzeitig verlagert sich die Kettenlasche dabei auch radial in Richtung des Einzelkettenrads. Anschließend verlagert sich der Zahn in einer Radialbewegung weiter in radialer Richtung hinein in den Zwischenraum der Antriebskette, bis die Kettenrolle maximal in den Zahnzwischenraum eingreift. Hierbei wird keine weitere Axialbewegung der Kettenlasche gegenüber dem Zahn des Einzelkettenrads ausgeführt. In dem Zustand des maximalen Eingriffs ist an der Unterseite der Kettenrolle, in Richtung der Drehachse des Einzelkettenrads betrachtet, lediglich noch ein minimaler Abstand zwischen der Kettenrolle und dem Kettenrad vorhanden, was als sogenannte Fußluft bezeichnet wird. Der Betrag dieses Abstands kann beispielsweise im Bereich von 0,2 bis 0,3 mm liegen. Es versteht sich, dass sich die zuvor beschriebenen Schritte bei einem Eingriff des nächsten Kettengelenks in der beschriebenen Weise wiederholen. Je nach Zähne Zahl und Größe des Kettenrads kommt es hier zu zeitlichen Überlappungen.

Bei derartigen Kettenrädern kommt es darauf an, dass jeder neu in einen Laschenzwischenraum der Kette eingreifende Zahn nicht auf der Zahnspitze zum Aufreiten kommt, sondern immer ein Sicherheitsabstand zwischen dem Zahnkopf und den Kettenlaschen bestehen bleibt. Dadurch wird das Ziel erreicht, dass keine zusätzlichen Kettenführungseinrichtungen benötigt werden, auch wenn die Kette beispielsweise bedingt durch eine aktuelle Schaltposition auf einem hinteren Ritzelsatz bzw. einer Ritzelkassette unter einem relativ großen Winkel in Schrägstellung auf das Kettenrad einläuft. Der Spielraum zur Bewegung der Kettenglieder in axialer Richtung ist durch die Richtung vorgegeben, in der die voll im Eingriff an den Zähnen befindlichen Kettenglieder ausgerichtet sind. Die Abweichung von dieser Ausrichtung wird begrenzt durch die "Flexibilität" der Kette in axialer Richtung, die aber keine wirkliche Verbiegung darstellt, sondern lediglich die Ausnutzung von Spiel in axialer Richtung zwischen den Kettengliedern.

Beim Außereingriffgelangen des Einzelkettenrads und der Antriebskette können die zuvor beschriebenen Schritte im Wesentlichen in umgekehrter Reihenfolge und umgekehrtem Richtungssinn der Drehrichtung betrachtet werden, beginnend bei einem maximalen Eingriff und endend bei einem fortschreitenden Beabstanden des Kettengelenks und des Einzelkettenrads. Ein wesentlicher Aspekt hierbei ist auch eine Drehrichtungsumkehr des Kettenrades, die beispielsweise dann von Belang ist, wenn das Fahrrad in rauem Gelände gefahren wird, wobei die Tretkurbeln zur Unterstützung des Fahrers in eine waagrechte Stellung gebracht werden müssen. Der Fahrer lastet dann beispielsweise mit seinem ganzen Körpergewicht auf den beiden in waagrechte Stellung befindlichen Pedalen. Die entsprechende Pedalausrichtung kann in bestimmten Situationen durch Rückwärtstreten erfolgen. Auch in solchen Situationen darf die Kette nicht abspringen. Beim Rückwärtstreten wird die Kettenauslaufstelle des Vorwärtstretens zur Ketteneinlaufstelle während des Rückwärtstretens. Die Erfindung sorgt auch bei einem derartigen Einsatz für eine stabile Lage der Kette, ohne deren Lösen vom Einzelkettenrad selbst unter Verschleiß zu behindern.

Das Einzelkettenrad kann in einer Weiterbildung eine asymmetrische Ausbildung der flankennahen Aussparung aufweisen. Hierbei kann die Aussparung der Profilierung gegenüber der Lastflanke des betrachteten Zahns der ersten Zahngruppe in Umfangsrichtung betrachtet stärker zurückgesetzt sein als gegenüber einer Gegenlastflanke auf der Rückseite eines in Umfangsrichtung betrachtet nächstliegenden Zahns der ersten Zahngruppe. Diese asymmetrische Ausbildung der Aussparung ermöglicht es, dass sich eine an der Lastflanke angreifende Kettenrolle im Betrieb gegenüber bekannten Einzelkettenrädern weiter in die Lastflanke eingraben kann, ohne dass die über die Kettenrolle hinaus stehenden Abschnitte von Innenlaschen der Antriebskette mit dem Zahn in Kontakt gelangen.

In einer weiteren Ausführungsform, aber auch unabhängig von den vorangehend beschriebenen Merkmalen, kann die Lastflanke des wenigstens einen Zahns der ersten Zahngruppe, vorzugsweise einer Vielzahl oder aller Zähne, zumindest abschnittsweise einen Lastflankenwinkel in einem Bereich zwischen 110° und 125°, vorzugsweise in einem Bereich von 115°, aufweisen. Ein solcher Lastflankenwinkel ist vergleichsweise flach gegenüber Lastflankenwinkeln bekannter Einzelkettenräder und bewirkt somit eine Verteilung der Antriebskräfte auf mehrere Zähne des Einzelkettenrads. Der Lastflankenwinkel wird aufgespannt von der betrachteten Lastflanke und einer Tangente eines Hilfskreises. Der Hilfskreis ist koaxial zum Umfangskreis des Einzelkettenrads und schneidet die Lastflanke an einem in Bezug auf die Drehachse des Einzelkettenrads radial innen liegenden Ende der Lastflanke, d.h. an dem geometrischen Ort, an dem der radial am weitesten innen liegende geradlinig verlaufende Abschnitt der Lastflanke in einen gerundet ausgebildeten Zahnzwischenraum übergeht. Die Tangente des Hilfskreises berührt den Hilfskreis in diesem Schnittpunkt von Hilfskreis und Lastflanke. Der Lastflankenwinkel entspricht schließlich dem Winkel zwischen der Lastflanke und der Tangente, der größer als 90° ist.

Ein vergleichsweise flacher Lastflankenwinkel führt durch die Verteilung der Antriebskräfte auf mehrere Zähne zu geringeren Kontaktkräften zwischen einzelnen Zähnen und mit diesen in Eingriff stehenden Kettenrollen der Antriebskette. Dies bewirkt wiederrum eine Reduktion des Verschleißes des wenigstens einen Zahns, weshalb sich die Kettenrollen der Antriebskette über die Dauer des Betriebs weniger stark in die flache Lastflanke eingraben können. Dadurch kann ein ungehindertes Außereingriffgelangen der jeweiligen an der Lastflanke anliegenden Kettenrolle und dem Zahn weiter verbessert werden.

In einer Weiterbildung, aber auch unabhängig von den vorangehend diskutierten Merkmalen des Einzelkettenrads, können Zähne des Einzelkettenrads in Hochlastzonen flacher ausgebildet sein als in Totpunktzonen, wobei Hochlastzonen den Zonen des Einzelkettenrads entsprechen, an denen im Betrieb die größte Kraftübertragung zwischen Zähnen des Einzelkettenrads und Kettenrollen der Antriebskette auftritt, und wobei Totpunktzonen den Zonen des Einzelkettenrads entsprechen, an denen im Betrieb die geringste Kraftübertragung zwischen Zähnen des Einzelkettenrads und Kettenrollen der Antriebskette auftritt. Hochlastzonen und Totpunktzonen können in Abhängigkeit einer Kurbelstellung eines Kurbelarms des Einzelkettenrads bestimmt werden, wobei die größte Kraftübertragung in den Hochlastzonen bei einer im Wesentlichen waagrechten Kurbelstellung auftritt.

Während die flachen Lastflankenwinkel, d.h. die Lastflankenwinkel im Bereich zwischen 110° und 125°, vorzugsweise im Bereich von 115°, an Zähnen in den Hochlastzonen eine Verschleißreduktion bewirken, können die steileren bzw. regulären Lastflankenwinkel an Zähnen in den Totpunktzonen derart ausgebildet sein, dass ein Überspringen bzw. Abspringen der Antriebskette verhindert wird. Wird das Einzelkettenrad auf eine Tretkurbelanordnung montiert, so kann ein Zahnbereich mit Zähnen mit flacheren Lastflankenwinkeln derart positioniert sein, dass die Kette im Betrieb von diesem Zahnbereich etwa dann tangential abläuft, wenn gerade eine große Tretkraft von dem Fahrer auf die Tretkurbelanordnung ausgeübt wird, beispielsweise dann, wenn die Tretkurbel in einem Winkel von 20° steht.

Die Totpunktzonen können ferner in einer Ebene mit dem Kurbelarm liegen. Alternativ können die Totpunktzonen in Umfangsrichtung des Einzelkettenrads betrachtet in einer von der Kurbelarmebene um +/- 45° verschiedenen Ebene liegen.

Des Weiteren können Totpunktzonen um Hochlastzonen in Umfangsrichtung des Einzelkettenrads betrachtet im Wesentlichen rechtwinklig zueinander liegen, wobei auch eine andere Winkelstellung zueinander möglich ist.

Einander am Umfang des Kettenrads entgegengesetzte Zähne, d.h. zueinander um 180° verschobene Zähne, können ferner jeweils denselben Lastflankenwinkel aufweisen.

In einer Weiterbildung kann die Änderung der Lastflankenwinkel von Zähnen mit regulären Lastflankenwinkeln in den Totpunktzonen zu Zähnen mit flachen Lastflankenwinkeln in den Hochlastzonen entlang des Einzelkettenradumfangs stetig verlaufen, d.h. im Wesentlichen kontinuierlich zu- oder abnehmen. Alternativ können auch lediglich einzelne Zähne oder mehrere Zähne in den Totpunktzonen bzw. Hochlastzonen steile bzw. flache Lastflanken aufweisen.

In einer Weiterbildung kann zumindest an jedem zweiten Zahn, vorzugsweise an jedem Zahn der ersten Zahngruppe, wenigstens ein Vorsprung ausgebildet sein, der die anliegende Kettenrolle oder die Innenlasche zumindest abschnittsweise in Umfangsrichtung übergreift. Ein derartiges zumindest abschnittsweises Übergreifen einer anliegenden Kettenrolle oder Innenlasche kann einem Überspringen bzw. Abspringen der Antriebskette trotz eines flachen Lastflankenwinkels entgegenwirken.

Ferner kann der wenigstens eine Vorsprung an einem bezüglich einer zentralen Achse des Einzelkettenrads radial außen liegenden Bereich des betrachteten Zahns vorgesehen sein. Des Weiteren kann der wenigstens eine Vorsprung die Lastflanke und eine nach radial außen weisende Oberseite des betrachteten Zahns verbinden. Gemäß einer Weiterbildung kann der wenigstens eine Vorsprung dabei in Form eines in Umfangsrichtung von der Lastflanke vorspringenden Hakens ausgebildet sein, um die anliegende Kettenrolle und damit die Antriebskette gegen ein Überspringen oder Abspringen zu sichern.

In einer weiteren Ausführungsform kann der wenigstens eine Vorsprung quer zur Umfangsrichtung des Einzelkettenrad betrachtet eine geringere Breite als die Lastflanke aufweisen oder mit in Umfangsrichtung betrachtet abnehmender Materialstärke ausgebildet sein. Hierzu kann eine entsprechende, vorzugsweise seitliche oder beidseitige, Anfasung an einem bezüglich einer zentralen Achse des Einzelkettenrads radial außen liegenden Bereich des betrachteten Zahns vorgesehen sein, mit dem der Zahn beginnt, in den Zwischenraums zwischen Kettenlaschen der Antriebskette einzugreifen.

Gemäß einer weiteren Ausführungsform kann der wenigstens eine Vorsprung in der wenigstens einen flankennahen Aussparung vorgesehen sein und somit zumindest abschnittsweise eine anliegende Innenlasche der Antriebskette übergreifen. Dabei kann der wenigstens eine Vorsprung ferner an einem Ende der wenigstens einen flankennahen Aussparung vorgesehen sein und mit einem radial äußeren Rand an einen Bereich der Lastflanke angrenzen. Der wenigstens eine Vorsprung kann damit zwar in Kontakt mit einem Abschnitt der Innenlasche der Antriebskette gelangen, um die Kette gegen ein Überspringen oder Abspringen zu sichern, jedoch verhindert der Vorsprung aufgrund seiner geometrischen Ausgestaltung und Anordnung ein Außereingriffgelangen des betrachteten Zahns und der daran anliegenden Antriebskette nicht.

In einer Weiterbildung weist die wenigstens eine Lastflanke eine Ausnehmung auf. Diese Ausnehmung ist gegenüber der Lastflanke zurückgesetzt und derart an dem betrachteten Zahn angeordnet, dass sich trotz eines im Betrieb auftretenden Verschleißes, d.h. trotz eines Eingrabens der Kettenrolle in die Lastflanke, keine Kante in der Lastflanke bildet, die einem vorgesehenen Außereingriffgelangen des betrachteten Zahns und der daran anliegenden Kettenrolle entgegensteht. Mit anderen Worten kann durch die Ausnehmung bereits der Ausbildung einer Verschleißkante entgegengewirkt werden. Vorzugsweise ist die Ausnehmung radial außerhalb und entfernt von einem Kontaktpunkt einer Kettenrolle mit der Lastflanke im Betrieb angeordnet. Sie soll den Kontakt der Kettenrolle mit der Lastflanke nicht beeinträchtigen, sondern erst dann wirksam werden, wenn Verschleiß auftritt.

Die Ausnehmung kann ferner eine kurvenförmige Kontur aufweisen und/oder sich über die gesamte Breite der wenigstens einen Lastflanke erstrecken. Die anliegende Kettenrolle kann dadurch trotz eines auftretenden Verschleißes im Wesentlichen ungehemmt auslaufen.

Gemäß einer weiteren Ausführungsform kann die wenigstens eine Lastflanke zudem einen ersten ausnehmungsfreien Lastflankenabschnitt aufweisen, der bezüglich der zentralen Achse des Kettenrads radial nach innen an die wenigstens eine Ausnehmung angrenzt. Die Ausnehmung kann ferner den ersten ausnehmungsfreien Lastflankenabschnitt und einen radial äußeren Kopfbereich des jeweiligen Zahns verbinden. Dabei kann die Ausnehmung mit einem bezüglich der zentralen Achse des Kettenrads radial innen liegenden Endbereich an den ausnehmungsfreien Lastflankenabschnitt angrenzen und mit einem bezüglich der zentralen Achse des Kettenrads radial außen liegenden Endbereich an den Kopfbereich angrenzen. Die Ausnehmung kann sich aber auch bis zur Zahnspitze bzw. bis zum Zahnkopf erstrecken.

Alternativ dazu kann die wenigstens eine Lastflanke einen zweiten ausnehmungsfreien Lastflankenabschnitt aufweisen, der bezüglich der zentralen Achse des Kettenrads radial nach außen an die Ausnehmung angrenzt. In diesem Fall ist die wenigstens eine Ausnehmung zwischen den beiden ausnehmungsfreien Lastflankenabschnitten angeordnet.

In den verschiedenen Ausführungsformen kann der erste und/oder der zweite ausnehmungsfreie Lastflankenabschnitt einen flachen Lastflankenwinkel, d.h. einen Lastflankenwinkel in einem Bereich von 110° und 125°, vorzugsweise in einem Bereich von 115°, aufweisen.

Gemäß einer Weiterbildung kann vorzugsweise jeder Zahn eine weitere Lastflanke aufweisen, die zu der wenigstens einen Lastflanke entgegengesetzt angeordnet und von dieser beabstandet ist, wobei die zweite Lastflanke im Wesentlichen symmetrisch zu der wenigstens einen Lastflanke ausgebildet ist. Dies hat den Vorteil, dass aufgrund der symmetrischen Ausbildung Herstellungskosten reduziert werden können.

Zudem ist es hierdurch möglich, ein Einzelkettenrad bereitzustellen, das eine Lastflanke und eine Gegenlastflanke aufweist. Ein derartiges Einzelkettenrad kann am Fahrrad spiegelverkehrt ummontiert werden, indem eine dem Fahrradrahmen zuvor zugewandte Seite des Einzelkettenrads durch das Ummontieren von dem Fahrradrahmen abgewandt wird, sodass das Einzelkettenrad von beiden Seiten nutzbar ist. Hierdurch kann das Einzelkettenrad eine doppelt so hohe Lebensdauer aufweisen als herkömmliche Einzelkettenräder mit lediglich einer nutzbaren Laufrichtung.

Die weitere Lastflanke bzw. Gegenlastflanke kann dieselben Merkmale aufweisen wie zuvor und nachfolgend beschrieben.

In einer Weiterbildung kann im Bereich der Profilierung die flankennahe Aussparung lediglich abschnittsweise gegenüber der Lastflanke um eine größere Distanz zurückgesetzt sein als die Distanz, über die ein im Betrieb vorlaufender Abschnitt einer Innenlasche der Antriebskette der Kettenrolle über die Kettenrolle hinaus steht. Beispielsweise kann die flankennahe Aussparung abschnittsweise gegenüber der Lastflanke um ein Drittel weiter zurückgesetzt sein als der Rest der Aussparung. Hierdurch kann sichergestellt werden, dass der im Betrieb vorlaufende Abschnitt der Innenlasche der Antriebskette, der über die Kettenrolle hinaus steht, auch dann nicht in Kontakt mit der Aussparung gelangt, wenn sich die Kettenrolle im Betrieb in die Lastflanke eingräbt. So kann verhindert werden, dass ein Kontakt zwischen der Innenlasche der Antriebskette und dem Zahn im Bereich der Aussparung einem vorgesehenen Außereingriffgelangen entgegensteht.

Die flankennahe Aussparung kann in dieser Weiterbildung ferner im Bereich des Zahnkopfes einen zur Lastflanke hin weisenden Vorsprung aufweisen.

Gemäß einer weiteren Ausführungsform können die Zahnspitzen der Zähne der ersten Zahngruppe eine in Richtung quer zur Umfangsrichtung betrachtet geringere Materialstärke aufweisen als die Zahnspitzen bekannter Zähne der ersten Zahngruppe. Hierdurch können die seitlichen, d.h. in Richtung quer zur Umfangsrichtung betrachteten, Führungseigenschaften des Einzelkettenrads verbessert werden. Eine Reduktion der Materialstärke der Zahnspitzen der Zähne der ersten Zahngruppe erlaubt eine größere seitliche Auslenkung der Antriebskette, ohne dass diese dadurch im Betrieb auf Zahnspitzen von Zähnen der ersten Zahngruppe aufsetzt.

Die Materialstärke der Zahnspitzen der Zähne der ersten Zahngruppe können gegenüber bekannten Zähnen der ersten Zahngruppe dadurch reduziert werden, dass an den einzelnen Zähnen der ersten Zahngruppe verkürzte seitliche Führungsflächen mit einem steileren Führungsflächenwinkeln vorgesehen werden, die seitlichen Führungsflächen bei gleichbleibendem Führungsflächenwinkel reduziert werden oder die Zahnspitzen bei gleichbleibendem Führungsflächenwinkel radial nach außen hin verlängert werden.

Bei dieser Ausführungsform können die Zähne der zweiten Zahngruppe in radialer Richtung des Einzelkettenrads betrachtet mit geringerer Höhe ausgebildet sein als die Zähne der ersten Zahngruppe. Dabei können die Zähne der zweiten Zahngruppe eine Höhe von maximal 90 %, vorzugsweise maximal 75%, weiter bevorzugt maximal 50% oder kleiner, der Höhe der Zähne der ersten Zahngruppe aufweisen. Dadurch kann erreicht werden, dass die Antriebskette, die jeweils von benachbarten, in Umfangsrichtung vorlaufenden Zähnen der ersten Zahngruppe geführt wird, von diesen Zähnen bereits ausreichend weit in axialer Richtung bewegt worden ist, dass die Zähne der zweiten Zahngruppe im Wesentlichen ungehindert und sicher in die vorgesehenen Zwischenräume der Antriebskette eingreifen können.

Im Bereich der Gegenlastflanke treten im Betrieb geringere Kräfte auf als im Bereich der Lastflanke, weshalb besonders in diesem Bereich Verschmutzungen einen Kontakt zwischen dem Einzelkettenrad und Kettenrollen verhindern können, was zu einem Abspringen der Antriebskette im Betrieb führen kann.

In einer weiteren Ausführungsform kann das Einzelkettenrad daher zwischen Zähnen der ersten Zahngruppe und Zähnen der zweiten Zahngruppe im Bereich einer Gegenlastflanke bzw. an einer der Lastflanke gegenüberliegenden Rückseite eines Zahns der zweiten Zahngruppe oder in einem an die Lastflanke angrenzenden Zahnzwischenraum eine Außenkonturierung aufweisen, die zu lokalen Anlagepunkten oder Anlageabschnitten mit einer Kettenrolle führen. Diese lokalen Anlagepunkte oder Anlageabschnitte können Schmutzpartikel, wie beispielsweise Matsch, auf dem Einzelkettenrad durchdringen und somit die anliegende Kettenrolle hin zu einer für den Eingriff und die Lastübertragung optimalen Position auf die Lastflanke zu bewegen.

Die Außenkonturierung kann dabei durch Anbringen wenigstens einer kreisbogenförmigen Ausnehmung vorgesehen sein, wobei der Radius des Kreisbogens kleiner als der Radius der Kettenrolle ist.

In einer Weiterbildung kann wenigstens ein Zahn der ersten Zahngruppe und/oder wenigstens ein Zahn der zweiten Zahngruppe des Einzelkettenrads zumindest einen Verschleißindikator in Form einer Vertiefung aufweisen. Anhand dieses Verschleißindikators kann ein Verschleiß und damit verbunden eine verbleibende Lebensdauer des Einzelkettenrads angezeigt werden. Grundsätzlich ist es auch möglich, dass die diskutierten Merkmale bezüglich des Verschleißindikators unabhängig von unterschiedlich Materialstärke ausgebildeten Zähnen bei herkömmlichen Kettenrädern eingesetzt werden.

Der zumindest eine Verschleißindikator kann in einem Bereich des Zahns der ersten Zahngruppe und/oder des Zahns der zweiten Zahngruppe angeordnet sein, der im Betrieb in Kontakt mit der Kette gelangt. Ferner kann der zumindest eine Verschleißindikator an dem Zahn oder den Zähnen vorgesehen sein, der oder die im Betrieb am stärksten beansprucht bzw. verschlissen werden.

Der zumindest eine Verschleißindikator kann dabei im Bereich der Lastflanke des jeweiligen Zahns ausgebildet sein, um den durch eine Wechselwirkung des Zahns mit den Kettenrollen der Kette auftretenden Verschleiß anzuzeigen. Hierbei kann der Verschleißindikator im Bereich der Lastflanke in Form einer kreisbogenförmigen Vertiefung ausgebildet sein, die in Umfangsrichtung betrachtet gegenüber der Lastflanke zurückgesetzt ist. Der Verschleißindikator kann zudem dem Zahnfuß bzw. Zahngrund benachbart angeordnet sein. Die Ausnehmung kann sich entlang der gesamten Materialstärke des Zahns, also über die gesamte Zahntiefe, oder nur über einen Teil davon, beispielsweise in einem Teilbereich von 30% bis 50 % der Zahntiefe erstrecken.

Alternativ oder zusätzlich dazu kann der zumindest eine Verschleißindikator im Bereich einer oder beider Seitenfläche/n des jeweiligen Zahns ausgebildet sein, um den durch eine Wechselwirkung des Zahns mit den Laschen der Kette auftretenden Verschleiß anzuzeigen. Hierbei kann der Verschleißindikator quer zur Umfangsrichtung betrachtet in Form einer kreisförmigen Vertiefung mit konstanter Tiefe vorgesehen sein.

Im Laufe des Betriebs werden die an den Verschleißindikator angrenzenden Bereiche des jeweiligen Zahns durch das Eingreifen mit der Antriebskette fortschreitend abgenutzt bzw. in Richtung einer maximalen Tiefe der Vertiefung fortschreitend abgetragen. Dadurch wird auch der Verschleißindikator immer weiter abgenutzt. Sobald die an den Verschleißindikator angrenzenden verschlissenen Bereiche des jeweiligen Zahns durch die Abnutzung im Wesentlichen in einer Ebene mit der maximalen Tiefe des Verschleißindikators bzw. der Vertiefung liegen, entspricht dies einer vollständigen Abnutzung. Die maximale durch den Verschleißindikator anzeigbare Tiefe kann dabei vorzugsweise derart gewählt sein, dass sichergestellt ist, dass keine Funktionseinbußen des Einzelkettenrads auftreten, solange diese maximale durch den Verschleißindikator anzeigbare Tiefe nicht vollständig abgenutzt ist.

Um einen auftretenden Verschleiß bestmöglich anzuzeigen, kann der Verschleißindikator einen starken Farbkontrast gegenüber den umliegenden Bereichen des jeweiligen Zahns aufweisen, so dass eine verschlissene Oberfläche und eine nicht verschlissene Oberfläche eindeutig voneinander unterscheidbar sind. Beispielsweise kann dazu im Bereich der Vertiefung eine schwarze Eloxalschicht oder eine sonstige farbintensive Schicht aufgetragen sein.

Des Weiteren kann eine Fahrradvorderkurbelanordnung bereitgestellt werden, die einen Kurbelarm und ein Einzelkettenrad umfasst, das an dem Fahrradkurbelarm angebracht ist. Das Einzelkettenrad kann dabei eines oder mehrere der zuvor beschriebenen Merkmale aufweisen.

Ein Einzelkettenrad mit einem oder mehreren der zuvor beschriebenen Merkmale kann auch für den Einsatz in einer schaltbaren Mehrfach-Kettenradanordnung vorgesehen sein. Für diesen Fall sind zusätzliche Einprägungen und/oder Passageausnehmungen als Teil einer Schaltgasse an dem Einzelkettenrad vorzusehen. Das Einzelkettenrad wird in diesem Fall zusammen mit anderen Einzelkettenrädern jeweils separat an einer Fahrradkurbelanordnung angebracht.

Die in den Figuren 1 bis 23 und Figuren 29 bis 35 dargestellten Ausführungsformen sind nicht erfindungsgemäß und dienen lediglich der Veranschaulichung. Bevorzugte Ausführungsformen werden nachfolgend anhand der beigefügten, schematischen Zeichnungen näher erläutert, in denen
- Figur 1: eine perspektivische Ansicht eines Ausschnitts eines Einzelkettenrads gemäß einer ersten Ausführungsform zeigt,
- Figur 2: eine Seitenansicht des in Fig. 1 gezeigten Ausschnitts zeigt,
- Figur 3: eine perspektivische Ansicht eines Zahns einer ersten Zahngruppe eines Einzelkettenrads gemäß einer zweiten Ausführungsform zeigt,
- Figur 4: eine Seitenansicht des in Fig. 3 gezeigten Zahns mit einer daran anliegenden Kettenrolle zeigt,
- Figur 5: eine perspektivische Ansicht eines Ausschnitts eines Einzelkettenrads gemäß einer dritten Ausführungsform zeigt,
- Figur 6: eine Seitenansicht des in Fig. 5 gezeigten Ausschnitts zeigt,
- Figur 7: eine perspektivische Ansicht eines Zahns einer ersten Zahngruppe eines Einzelkettenrads gemäß einer vierten Ausführungsform zeigt,
- Figur 8: eine Seitenansicht des in Fig. 7 gezeigten Zahns mit einer daran anliegenden Kettenrolle zeigt,
- Figur 9: eine perspektivische Ansicht eines Ausschnitts eines Einzelkettenrads gemäß einer fünften Ausführungsform zeigt,
- Figur 10: eine Seitenansicht des in Fig. 9 gezeigten Ausschnitts zeigt,
- Figur 11: eine schematische Darstellung eines Verschleißes an einem Zahn der ersten Zahngruppe eines Einzelkettenrads gemäß der fünften Ausführungsform zeigt,
- Figur 12: eine perspektivische Ansicht eines Ausschnitts eines Einzelkettenrads gemäß einer sechsten Ausführungsform zeigt,
- Figur 13: eine Seitenansicht des in Fig. 12 gezeigten Ausschnitts zeigt,
- Figur 14: eine Seitenansicht eines Ausschnitts eines Einzelkettenrads gemäß einer siebten Ausführungsform zeigt,
- Figur 15: eine perspektivische Ansicht des in Fig. 14 gezeigten Ausschnitts zeigt,
- Figur 16: eine weitere perspektivische Ansicht des in Fig. 14 gezeigten Ausschnitts zeigt,
- Figur 17: eine rückseitige Seitenansicht des in Fig. 14 gezeigten Ausschnitts zeigt,
- Figur 18: eine perspektivische Ansicht eines Ausschnitts eines Einzelkettenrads gemäß einer achten Ausführungsform zeigt,
- Fig. 19: eine Seitenansicht des in Fig. 18 gezeigten Ausschnitts zeigt,
- Fig. 20: eine Seitenansicht einer Tretkurbelanordnung mit einem Einzelkettenrad gemäß einer neunten Ausführungsform zeigt,
- Fig. 21: den Ausschnitt A aus Figur 20 vergrößert zeigt,
- Fig. 22: den Ausschnitt B aus Figur 20 vergrößert zeigt,
- Fig. 23: eine alternative Ausgestaltung des Einzelkettenrads gemäß Figur 20 zeigt,
- Fig. 24: einen perspektivischen Ausschnitt eines Einzelkettenrads gemäß einer zehnten Ausführungsform zeigt,
- Fig. 25: das Einzelkettenrad gemäß Figur 24 in einer Gesamtdarstellung zeigt,
- Fig. 26a, b: Darstellungen unterschiedlicher Betriebsphasen für das Eingreifen der Zähne des Einzelkettenrads gemäß Figur 25 und einer sich nähernden Kettenlasche zeigt,
- Fig. 27: eine Darstellung zur Bestimmung der maximalen Zahnhöhe bei den Zähnen der ersten Zahngruppe zeigt,
- Fig. 28: eine Darstellung zur Bestimmung der maximalen Zahnhöhe bei den Zähnen der zweiten Zahngruppe zeigt,
- Fig. 29: eine Darstellung eines Ausschnitts eines Kettenrads gemäß einer weiteren Ausführungsform zeigt,
- Fig. 30: das Kettenrad gemäß Figur 29 in einer ersten Betriebsphase beim Einlaufen der Kette zeigt,
- Fig. 31: das Kettenrad gemäß Figur 29 in einer folgenden Betriebsphase Kraftübertragung durch die Kette zeigt,
- Fig. 32: eine perspektivische Ansicht einer weiteren Ausführungsform zeigt, wobei lediglich zwei Zähne mit jeweils einer Vertiefung als Verschleißindikator abgebildet sind,
- Fig. 33: eine schematische Darstellung, die die Funktionsweise des an einer Lastflanke angebrachten Verschleißindikators zeigt,
- Fig. 34: eine schematische Darstellung, die die Funktionsweise des an einer Seitenfläche eines Zahns angebrachten Verschleißindikators zeigt, und
- Fig. 35: verschiedene Verschleißsituationen bei einem Kettenrad gemäß dem Stand der Technik darstellt.

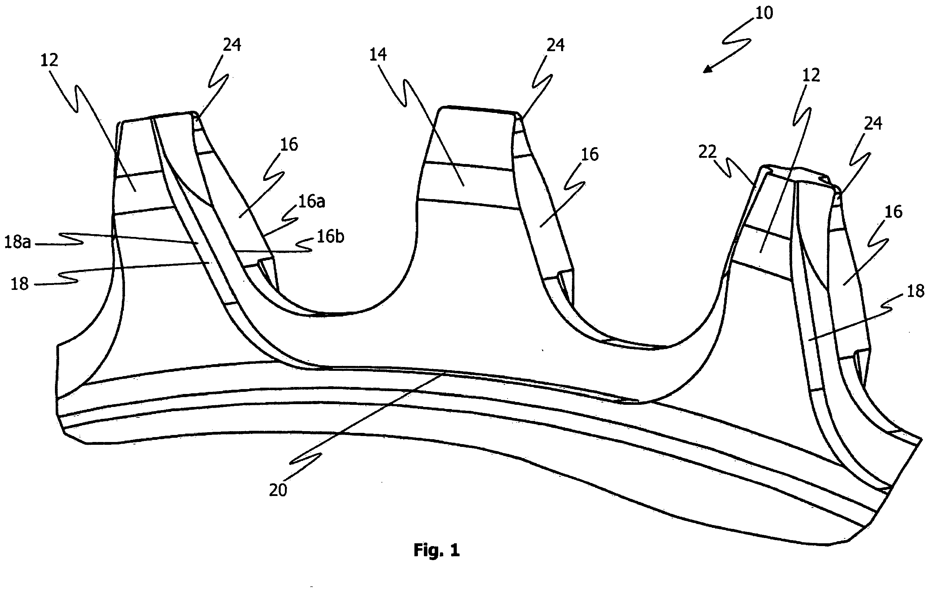

Die in den Figuren 1 bis 23 und Figuren 29 bis 35 dargestellten Ausführungsformen sind nicht erfindungsgemäß und dienen lediglich der Veranschaulichung.

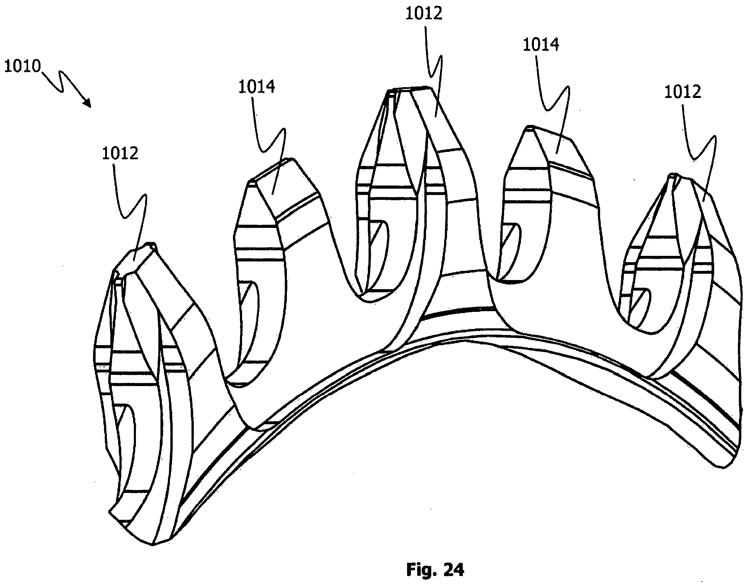

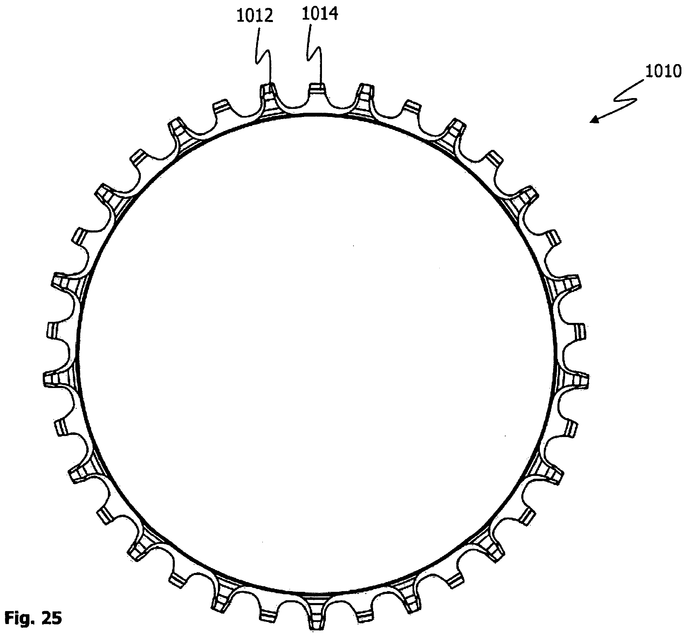

Die erfindungsgemäßen Ausführungsformen sind in den Figuren 24 bis 28 dargestellt.

Fig. 1 zeigt einen Ausschnitt eines Einzelkettenrads 10 gemäß einer ersten Ausführungsform. Dabei sind in dem Ausschnitt zwei Zähne 12 einer ersten Zahngruppe gezeigt, zwischen denen ein Zahn 14 einer zweiten Zahngruppe angeordnet ist. Die Zähne 12 der ersten Gruppe weisen in Richtung quer zur Umfangsrichtung des Einzelkettenrads 10 betrachtet einen Abschnitt mit größerer Materialstärke auf als der Zahn 14 der zweiten Gruppe. Des Weiteren weisen die Zähne 12 der ersten Zahngruppe von oben betrachtet einen plus- bzw. kreuzförmigen Querschnitt auf.

Die Zähne 12 der ersten Zahngruppe und der Zahn 14 der zweiten Gruppe umfassen jeweils eine Lastflanke 16, über die eine Kraftübertragung zwischen dem jeweiligen Zahn 12, 14 und einer daran anliegenden Kettenrolle einer Antriebskette (in Fig. 1 nicht gezeigt) ermöglicht wird. Zwei in axialer Richtung betrachtete seitliche Kanten 16a, 16b der Lastflanke 16 sind jeweils abschnittsweise nach radial außen hin aufeinander zulaufend ausgebildet, so dass die Materialstärke der jeweiligen Lastflanke 16 in einem oberen Bereich in Richtung quer zur Umfangsrichtung betrachtet nach radial außen hin abnimmt. Dies ermöglicht ein verbessertes Eingreifen der Zähne 12 in die zugehörigen Zwischenräume der Antriebskette.

Jeder der Zähne 12 der ersten Gruppe weist eine Profilierung auf, die im Hinblick auf die bekannte Geometrie der Antriebskette (nicht gezeigt) derart ausgebildet ist, dass ein vorgesehenes Eingreifen der Zähne 12 der ersten Gruppe in die zugehörigen Zwischenräume der Antriebskette, das heißt die Zwischenräume der Außenlaschenglieder der Antriebskette, sichergestellt ist. Entsprechend ist der Zahn 14 der zweiten Zahngruppe geometrisch dazu ausgebildet, in die entsprechenden Zwischenräume der Innenlaschenglieder der Antriebskette einzugreifen.

Die Profilierung der gezeigten Zähne 12 der ersten Gruppe umfasst jeweils flankennahe Aussparungen 18, die in axialer Richtung betrachtet seitlich neben der Lastflanke 16 ausgebildet sind. Dabei sind die flankennahen Aussparungen 18 gegenüber der Lastflanke 16 tangential zurückgesetzt. Die flankennahen Aussparungen 18 ermöglichen es, dass bei einem Eingriff des jeweiligen Zahns 12 der ersten Gruppe in die Antriebskette und einer damit verbundenen Kraftübertragung zwischen der zu dem Zahn 12 gehörenden Lastflanke 16 und einer daran anliegenden Kettenrolle der Antriebskette jeweils ein über die Kettenrolle hinaus stehender Abschnitt einer Innenlasche der Antriebskette in die Aussparung 18 bzw. die Aussparungen 18 zumindest abschnittsweise eingreifen kann. Dabei sind die Aussparungen 18 ausreichend weit in Umfangsrichtung, d.h. tangential, gegenüber der Lastflanke 16 zurückgesetzt bzw. von der Lastflanke 16 beabstandet, dass die über die Kettenrolle hinaus stehenden Abschnitte der Innenlaschen der Antriebskette im Wesentlichen nicht in Kontakt mit der der Lastflanke 16 zumindest abschnittsweise parallelen Flanke 18a der Aussparung 18 gelangt.

In der in Fig. 1 gezeigten Ausführungsform erstreckt sich die Aussparung 18 nach radial außen betrachtet bis hin zur Oberseite des jeweiligen Zahns 12 der ersten Zahngruppe. Nach radial innen betrachtet schließt sich die Aussparung 18 an eine weitere Ausnehmung 20 an, die sich im Wesentlichen in Umfangsrichtung des Einzelkettenrads 10 an dem benachbarten Zahn 14 der zweiten Gruppe vorbei zwischen zwei Zähnen der ersten Zahngruppe erstreckt und die flankennahe Aussprung 18 mit einer rückseitigen Aussparung 22 des nächstliegenden Zahns 12 der ersten Zahngruppe verbindet. Diese rückseitige Aussparung 22 ist dabei auf einer der Lastflanke 16 entgegengesetzten Seite des in Umfangsrichtung betrachtet nächstgelegenen Zahns 12 der ersten Zahngruppe ausgebildet.

Die Lastflanken 16 der Zähne 12, 14 weisen im Vergleich zu Lastflanken bekannter Einzelkettenräder vergleichsweise flache Lastflankenwinkel auf. Durch diese Ausbildung vergleichsweiser flacher Lastflankenwinkel verteilt sich die Kraftübertragung zwischen mehreren aufeinanderfolgenden Zähnen 12, 14 des Einzelkettenrads 10 und der Antriebskette auf eine Vielzahl an Lastflanken 16, wodurch die lokale Flächenpressung auf jeden Zahn reduziert wird und was insgesamt eine Verschleißreduktion bewirkt. Dadurch wird erreicht, dass sich die Kettenrollen der Antriebskette aufgrund des Verschleißes nicht zu weit in die Lastflanken 16 eingraben. Damit kann verhindert werden, dass die über die Kettenrollen hinaus stehenden Abschnitte der Innenlaschen der Antriebskette in Kontakt mit den Aussparungsflanken 18a der Aussparungen 18 gelangen, was zu einer Blockierung der Antriebskette führen und somit einem Außereingriffgelangen der Antriebskette und der Zähne 12,14 des Einzelkettenrads 10 entgegenstehen würde. Ein sogenanntes "Chainsuck" kann also durch Verschleißreduktion wirkungsvoll verhindert werden.

Um die Antriebskette trotz der vergleichsweise flachen Lastflankenwinkel der Lastflanken 16 bei einem Eingriff auf dem Einzelkettenrad 10 radial sicher zu halten, so dass kein ungewolltes Abspringen bzw. Überspringen der Antriebskette stattfindet, weisen zumindest die Zähne 12 der ersten Gruppe jeweils einen mit der Lastflanke 16 verbundenen hakenförmigen Vorsprung 24 auf. Der hakenförmige Vorsprung 24 steht jeweils tangential betrachtet gegenüber der Lastflanke 16 hervor und schließt sich radial nach außen hin an die Lastflanke 16 an. Dabei verbindet der Vorsprung 24 die Lastflanke 16 mit der Oberseite des Zahns 12 der ersten Zahngruppe.

Bei einem Eingriff der Antriebskette und des Einzelkettenrads 10 übergreift der Vorsprung 24 zumindest abschnittsweise eine anliegende Kettenrolle der Antriebskette und sichert diese somit gegen ein ungewolltes Abspringen bzw. Überspringen in diesem Bereich.

Der Vorsprung 24 ist dabei derart ausgebildet, dass er die Antriebskette zwar gegen ein ungewolltes Abspringen sichert, wobei er jedoch ein funktionsgemäßes Außereingriffgelangen des Einzelkettenrads 10 und der Antriebskette im Leertrum nicht behindert.

Wie in Fig. 1 zu erkennen ist, weist auch der Zahn 14 der zweiten Zahngruppe den in Bezug auf die Zähne 12 der ersten Zahngruppe beschriebenen flachen Lastflankenwinkel der Lastflanke 16 sowie einen damit verbundenen Vorsprung 24 auf.

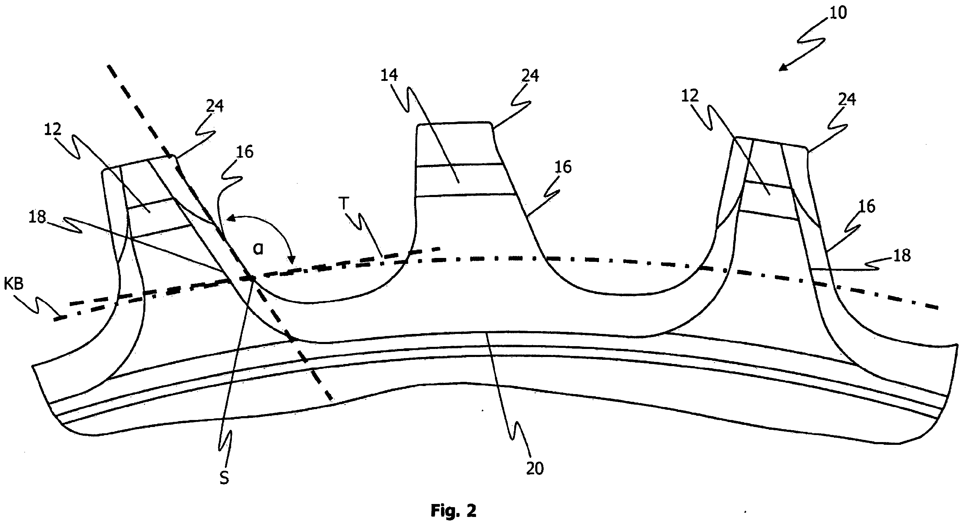

Fig. 2 zeigt eine Seitenansicht des in Fig. 1 dargestellten Ausschnitts des Einzelkettenrads 10 gemäß der ersten Ausführungsform. Dabei sind in Fig. 2 zusätzliche Hilfslinien zum Berechnen der Lastflankenwinkel der Lastflanken 16 dargestellt.

Ein Kreisbogen KB eines Kreises, der konzentrisch zu dem Kettenrad 10 ist, schneidet die Lastflanke 16 in einem Punkt S. Der Punkt S stellt gleichzeitig den Berührungspunkt der Tangente T des Kreisbogens KB dar. Die Tangente T spannt in der in Fig. 2 gezeigten Darstellung mit der Lastflanke 16 einen Winkel α auf, der den Lastflankenwinkel der Lastflanke 16 beschreibt. Der Lastflankenwinkel α bezeichnet jeweils denjenigen Winkel zwischen der Lastflanke 16 und der Tangente T, der größer als 90° ist.

In der in Fig. 2 gezeigten Ausführungsform weisen die Lastflanken 16 einen Lastflankenwinkel α von etwa 120° auf, wobei auch eine Ausbildung von Lastflanken mit Lastflankenwinkeln im Bereich von 110° bis 125° möglich ist.

Bei den im Folgenden beschriebenen weiteren Ausführungsformen werden für gleichartige bzw. gleichwirkende Komponenten die gleichen Bezugszeichen wie bei der vorangehend beschriebenen ersten Ausführungsform verwendet. Jedoch wird für die weiteren Ausführungsformen eine fortlaufende Ziffer, beginnend bei 1, vorangestellt. Die Komponenten, die in den weiteren Ausführungsformen nicht erneut beschrieben sind, stimmen in ihrer Ausbildung und Funktion mit den entsprechenden Komponenten der ersten Ausführungsform überein. Auf die Bezugszeichen einzelner Komponenten wird der Übersicht halber in den zugehörigen Figuren der weiteren Ausführungsformen teilweise verzichtet.

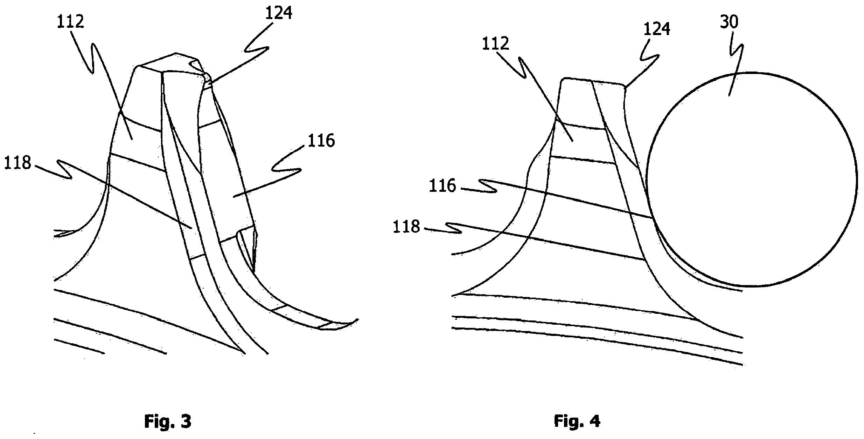

Die Fig. 3 und 4 zeigen einen Zahn 112 der ersten Zahngruppe gemäß einer zweiten Ausführungsform, wobei in Fig. 4 zudem eine an dem Zahn 112 anliegende Kettenrolle 30 der Antriebskette schematisch dargestellt ist. Der Zahn 112 der zweiten Ausführungsform entspricht im Wesentlichen den in den Fig. 1 und 2 gezeigten Zähnen 12 der ersten Zahngruppe gemäß der ersten Ausführungsform. Der Unterschied gegenüber der ersten Ausführungsform besteht lediglich darin, dass der Zahn 112 der ersten Zahngruppe der weiteren Ausführungsform einen von oben (radial außen) betrachteten im Wesentlichen T-förmigen Querschnitt aufweist.

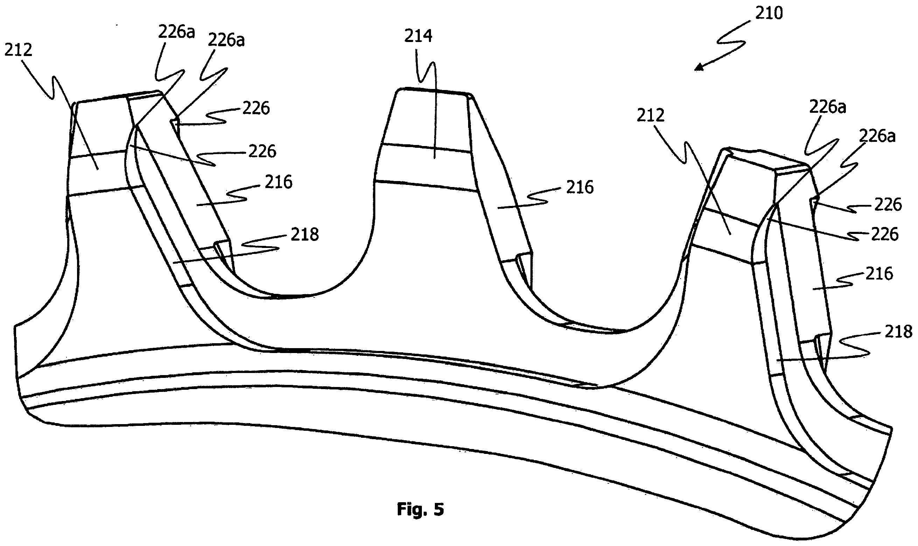

FIG. 5 zeigt einen Ausschnitt eines Einzelkettenrads 210 gemäß einer dritten Ausführungsform. Dabei sind wie in Fig. 1 zwei Zähne 212 einer ersten Zahngruppe gezeigt, zwischen denen ein Zahn 214 einer zweiten Zahngruppe angeordnet ist. Die Zähne 212 der ersten Gruppe weisen in Richtung quer zur Umfangsrichtung des Einzelkettenrads 210 betrachtet eine größere Materialstärke auf als der Zahn 214 der zweiten Gruppe. Auch die Zähne 212 der ersten Zahngruppe der dritten Ausführungsform weisen von oben betrachtet einen plus- bzw. kreuzförmigen Querschnitt auf.

Im Gegensatz zu der ersten Ausführungsform ist an den Lastflanke 216 der Zähne 212, 214 der dritten Ausführungsform kein Vorsprung vorgesehen. Somit erstreckt sich die Lastflanke 216 in Fig. 5 geradlinig jeweils von der Rundung im Bereich des Zahnfußes bis zur Oberseite der Zähne 212, 214.

Jedoch ist in der dritten Ausführungsform jeweils nahe dem Zahnkopf ein Vorsprung 226 in der flankennahen Aussparung 218 der Zähne 212 der ersten Zahngruppe vorgesehen. Wie in Fig. 5 gezeigt, sind die Vorsprünge 226 jeweils an einem radial außen liegenden Ende der Aussparungen 218 angeordnet und laufen mit einem radial äußeren Rand 226a in einen radial außen liegenden Bereich der Lastflanke 216. Demnach weist die Lastflanke 216 in einem Bereich oberhalb der Ränder 226a der Vorsprünge eine quer zur Umfangsrichtung betrachtete größere Breite auf als unterhalb dieser Ränder 226a.

Die Vorsprünge 226 in den Aussparungen übergreifen bei einem Eingriff der Antriebskette und des Einzelkettenrads 210 zumindest abschnittsweise einen Abschnitt der (nicht gezeigten) Innenlasche einer anliegenden Antriebskette und sichern diese somit gegen ein ungewolltes Abspringen bzw. Überspringen in diesem Bereich. Mit anderen Worten kann ein Abschnitt einer Innenlasche der Antriebskette mittels jedem der Vorsprünge 226 blockiert werden, um einem Abspringen der entgegenzuwirken, ohne ein gewolltes Außereingriffgelangen der Antriebskette und eines betrachteten Zahns zu behindern.

Die Lastflanken 216 der Zähne 212, 214 der dritten Ausführungsform weisen ebenfalls einen flachen Lastflankenwinkel von etwa 120° auf, wobei auch hier die Ausbildung eines davon abweichenden Lastflankenwinkels möglich ist.

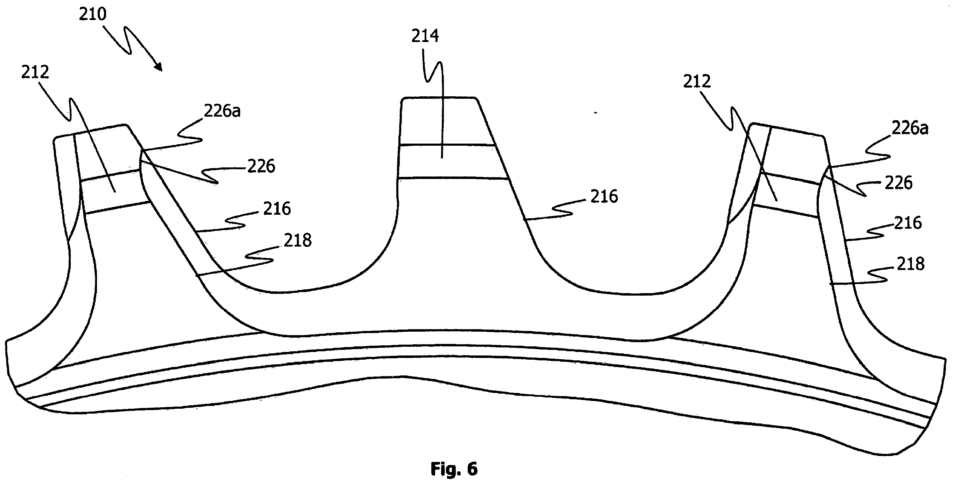

Fig. 6 zeigt den in FIG. 5 dargestellten Ausschnitts des Einzelkettenrads 210 der dritten Ausführungsform in einer Seitenansicht.

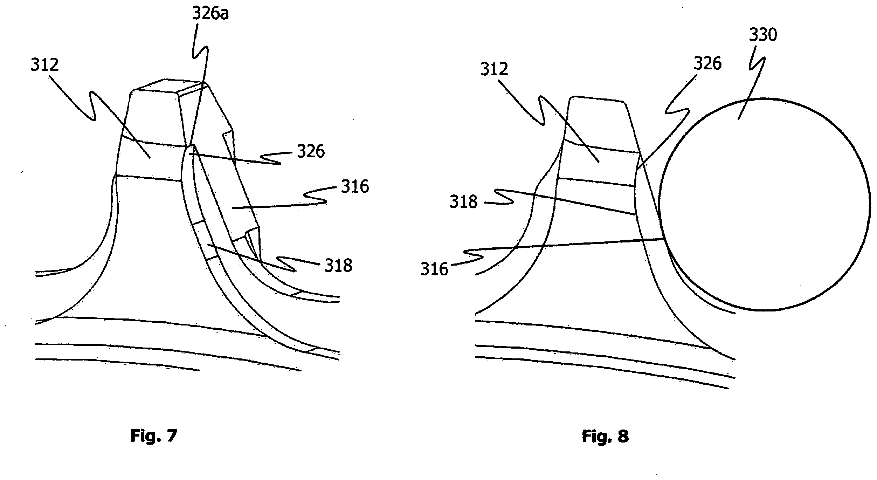

Die Fig. 7 und 8 zeigen jeweils einen Zahn 312 der ersten Zahngruppe gemäß einer vierten Ausführungsform, wobei in Fig. 8 zudem eine an dem Zahn 312 anliegende Kettenrolle 330 der Antriebskette dargestellt ist. Der Zahn 312 der zweiten Ausführungsform entspricht im Wesentlichen den in den Fig. 1 und 2 gezeigten Zähnen 212 der ersten Zahngruppe gemäß der dritten Ausführungsform (Fig. 5 und 6). Der Unterschied gegenüber der dritten Ausführungsform besteht lediglich darin, dass der Zahnkopf der Zähne 212 der ersten Zahngruppe der vierten Ausführungsform einen von oben betrachteten im Wesentlichen T-förmigen Querschnitt aufweist, wohingegen der Zahnkopf der Zähne 312 von oben betrachtet rechteckig ausgebildet ist.

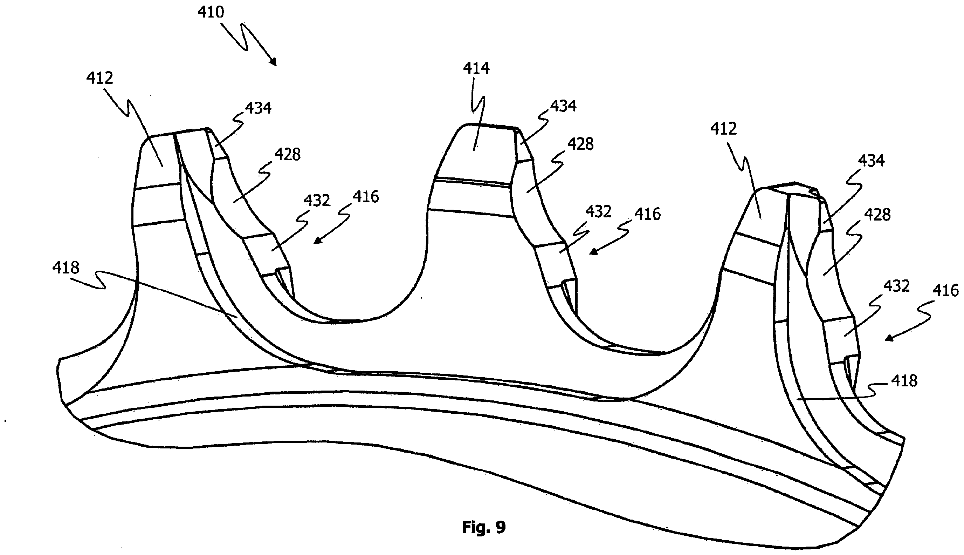

In Fig. 9 ist ein weiterer Ausschnitt eines Einzelkettenrads 410 gemäß einer fünften Ausführungsform mit Zähnen 412 einer ersten Zahngruppe und einem dazwischen angeordneten Zahn 414 einer zweiten Zahngruppe gezeigt. Auch in dieser Ausführungsform weisen die Zähne 412 der ersten Zahngruppe eine in Richtung quer zur Umfangsrichtung betrachtet größere Materialstärke auf als der Zahn 414 der zweiten Zahngruppe. Die die Zahnköpfe der Zähne 412 der ersten Zahngruppe sind in der fünften Ausführungsform von oben betrachtet mit einem im Wesentlichen T-förmigen Querschnitt gezeigt, jedoch ist auch hier alternativ die Ausbildung eines bekannten kreuz- bzw. plusförmiger Querschnitts möglich.

Die in Fig. 9 gezeigten Zähne 412 der ersten Zahngruppe und Zähne 414 der zweiten Zahngruppe sind in ihrer Ausbildung den Zähnen 12, 14 ähnlich der in Fig. 1 gezeigten ersten Ausführungsform. Jedoch sind an den in Fig. 9 gezeigten Zähnen keine Vorsprünge vorgesehen. Dagegen umfassen die Zähne 412, 414 gemäß der fünften Ausführungsform jeweils eine Ausnehmung 428, die im Bereich der jeweiligen Lastflanke 416 angeordnet ist.

Die Ausnehmung 428 weist eine kurvenförmige Kontur auf und erstreckt sich in Richtung quer zur Umfangsrichtung betrachtet jeweils über die gesamte der Lastflanke 416. In einem oberen Abschnitt der Ausnehmung 428 ist die Materialstärke der jeweiligen Ausnehmung 428 in Richtung quer zur Umfangsrichtung betrachtet nach radial außen hin abnehmend.

Die Lastflanken 416 der in Fig. 9 gezeigten Zähne 412, 414 weisen jeweils eine ersten 432 und einen zweiten 434 ausnehmungsfreien in der axialen Seitenansicht betrachtet geradlinigen Lastflankenabschnitt auf. Der erste Lastflankenabschnitt 432 ist dabei bezüglich der zentralen Drehachse des Einzelkettenrads 410 radial nach innen an die Ausnehmung 428 angrenzend ausgebildet. Entsprechend ist der zweite Lastflankenabschnitt 434 radial nach außen an die Ausnehmung 428 angrenzend ausgebildet. Die Materialstärke des zweiten Lastflankenabschnitts 432 ist, wie der obere Abschnitt der Ausnehmung 428, in Richtung quer zur Umfangsrichtung betrachtet nach radial außen hin abnehmend.

Die Ausnehmung 428 der jeweiligen Lastflanke 416 ist dabei in einem Bereich der Lastflanke 416 angeordnet, in dem es bei bekannten Einzelkettenrädern im Betrieb zu einer Bildung einer Kante aufgrund von Verschleiß bzw. aufgrund von sich in die Lastflanke eingrabender Kettenrollen der Antriebskette kommt. Eine solche Verschleißkante in der Lastflanke würde ein Außereingriffgelangen der Zähne und der Antriebskette behindern. Mittels der Ausnehmung 428 wird somit eine sich im Betrieb bildende Verschleißkante durch eine derartige Ausgestaltung des Einzelkettenrads wirksam unterbunden, so dass eine mit dem jeweiligen Zahn in Eingriff stehende Kettenrolle selbst bei starker Beanspruchung und trotz Verschleiß weiterhin frei auslaufen kann.

Die beiden in der axialen Seitenansicht betrachtet geradlinigen Lastflankenabschnitte 432, 434 fluchten zueinander und weisen in der gezeigten Ausführungsform denselben flachen Lastflankenwinkel von etwa 115° auf, wobei auch eine Ausbildung hiervon abweichender Lastflankenwinkel möglich ist. Beispielsweise können die Lastflanken 416 der fünften Ausführungsform alternativ auch steile Lastflanken gemäß bekannter Einzelkettenräder aufweisen.

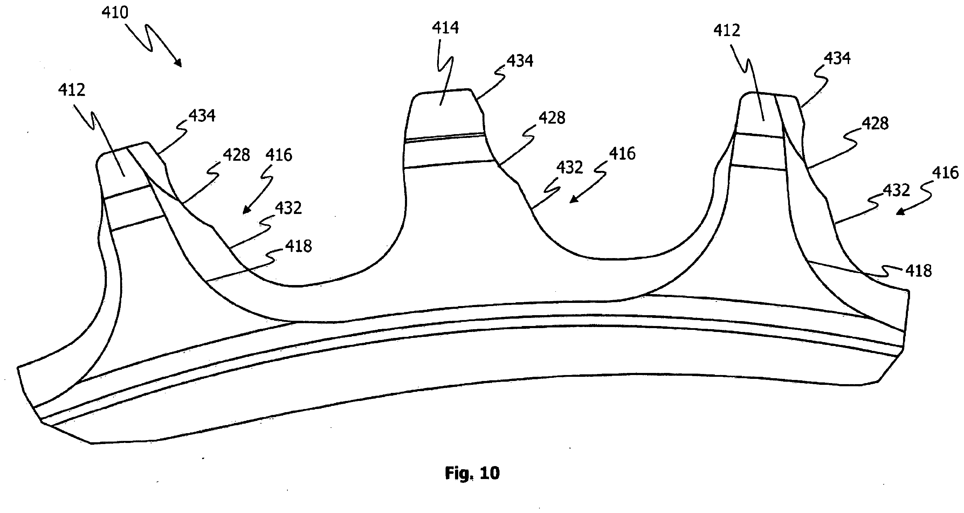

Fig. 10 zeigt die in Fig. 9 gezeigte fünfte Ausführungsform in einer Seitenansicht.

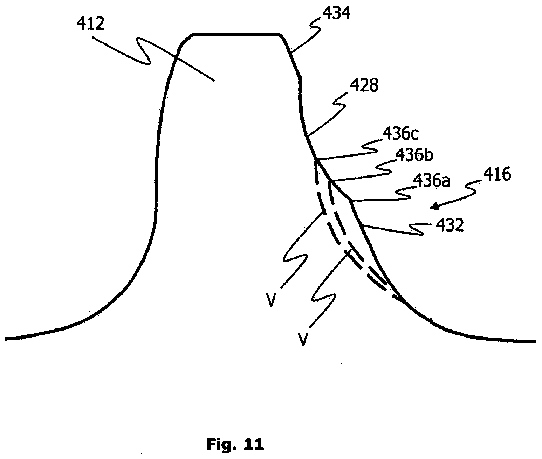

In Fig. 11 ist eine schematische Darstellung eines Umrisses eines Zahns 412 der ersten Zahngruppe gemäß der fünften Ausführungsform, wobei mithilfe von gestrichelten Linien V ein im Betrieb auftretender Verschleiß dargestellt ist. Es ist zu erkennen, dass sich eine mit dem Zahn 412 in Wechselwirkung stehende Kettenrolle (nicht gezeigt) im Wesentlichen in einem Bereich des ersten Lastflankenabschnitts 432 sowie in einem unteren Bereich der Ausnehmung 428 eingräbt, in dem im Betrieb die größte Lastübertragung stattfindet. Wie ebenfalls gezeigt ist, kommt es durch das verschleißbedingte Eingraben der anliegenden Kettenrolle jedoch zu keiner Kantenbildung, die ein freies Auslaufen der Kettenrolle blockieren würde. Durch die gegenüber der Lastflanke 416 zurückgesetzte Ausnehmung 428 wird sichergestellt, dass eine sich durch den Verschleiß bildende Kante 436a, 436b, 436c nicht oder nur minimal in Umfangsrichtung betrachtet über die Lastflanke 416 hinaus ragt und die Kettenrolle nicht behindert.

Es sei angemerkt, dass sich abweichend von der Figur 11 auch Verschleißzustände ergeben können, bei denen die Verschleißlinie 436c ebenso tief wie die Verschleißlinie 436b sein kann, wobei sich die Verschleißlinien hin zu der Ausnehmung 428 "bewegen". Derartige Verhältnisse können sich beispielsweise aufgrund einer verschleißbedingten Kettenlängung simultan zu dem gezeigten Verschleiß an der Lastflanke, beispielsweise in Form der Verschleißlinien 436b,c ergeben.

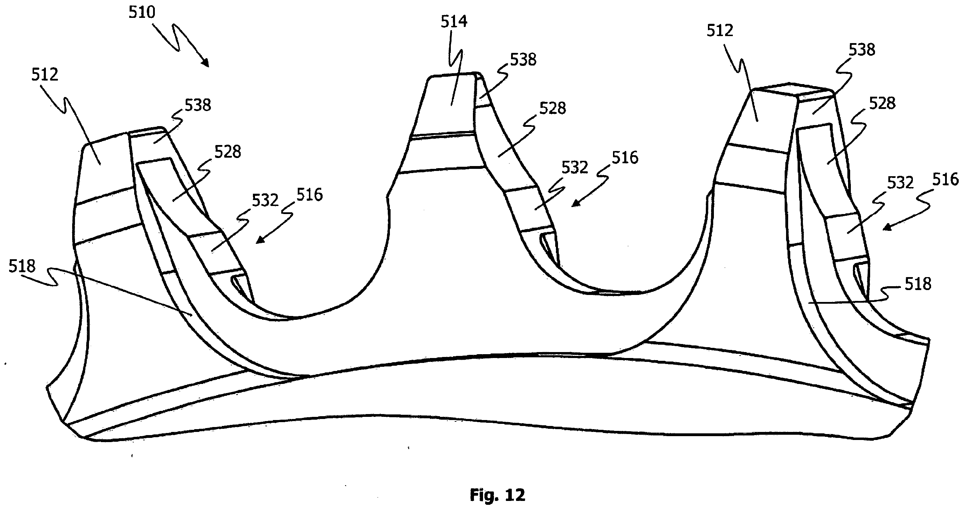

Alternativ zur fünften Ausführungsform zeigt Fig. 12 einen Ausschnitt eines Einzelkettenrads 510 gemäß einer sechsten Ausführungsform. Die sechste Ausführungsform entspricht im Wesentlichen der fünften Ausführungsform, jedoch weisen die Zähne 512, 514 des Einzelkettenrads 510 der sechsten Ausführungsform jeweils eine Lastflanke 516 mit lediglich einem ersten Lastflankenabschnitt 532 und keinem zweiten Lastflankenabschnitt auf.

Dieser erste Lastflankenabschnitt 532 grenzt bezüglich der zentralen Drehachse des Einzelkettenrads 510 radial nach innen an eine kurvenförmige Ausnehmung 528 an.

Radial nach außen betrachtet grenzt die Ausnehmung an eine Seitenfläche 538 des jeweiligen Zahns 512, 514 an.

Diese Seitenfläche 538 der Zähne 512 der ersten Zahngruppe liegt dabei in Umfangsrichtung betrachtet im Wesentlichen in einer Ebene mit einem daran angrenzenden oberen Endabschnitt der flankennahen Aussparungen 518, was einer Kosteneinsparung beim Herstellen des Einzelkettenrads 510 dienen kann.

Die Wirkungsweise der Ausnehmung 528 gemäß der sechsten Ausführungsform entspricht im Wesentlichen der in Bezug auf die fünfte Ausführungsform beschriebenen Wirkungsweise der zugehörigen Ausnehmung 428.

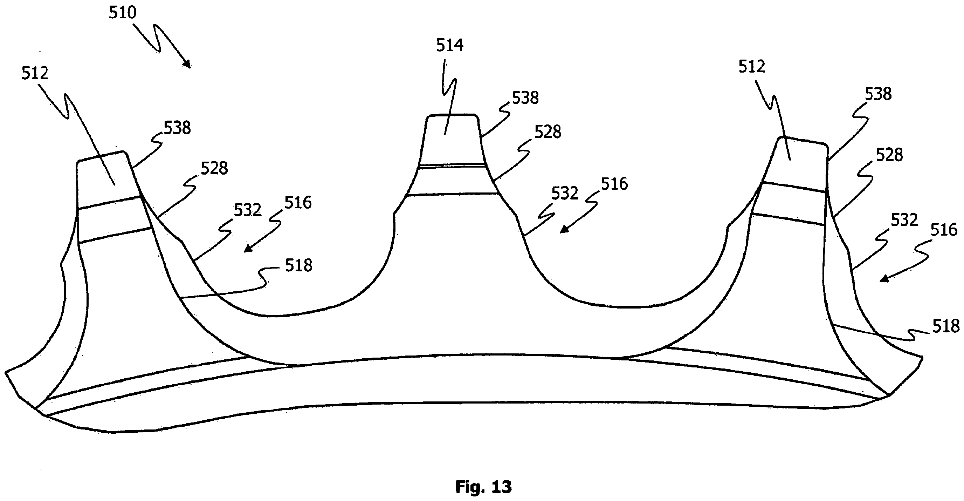

Fig. 13 zeigt den in Fig. 12 gezeigten Ausschnitt des Einzelkettenrads 510 in einer Seitenansicht.

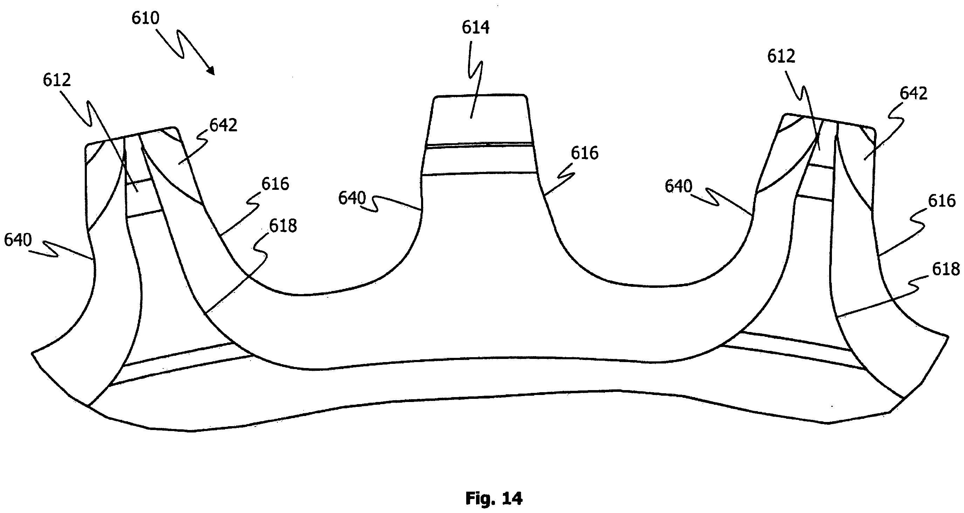

Die Fig. 14 bis 17 zeigen jeweils einen Ausschnitt eines symmetrisch ausgebildeten Einzelkettenrads 610 gemäß einer siebten Ausführungsform, bei dem an jedem Zahn 612 der ersten Zahngruppe an beiden Zahnflanken jeweils Aussparungen vorgesehen sind. Die Zähne sind also im wesentlichen symmetrisch zu ihrer achsenthaltenden Mittelebene ausgebildet. Ausnehmungen und/oder Vorsprünge sind in den Fig. 14 bis 17 nicht dargestellt, jedoch versteht sich, dass auch ein symmetrisch ausgebildetes Einzelkettenrad 610 gemäß der siebten Ausführungsform eines oder mehrere Merkmale der zuvor beschriebenen ausführungsformen aufweisen kann.

In Fig. 14 ist eine Seitenansicht des Ausschnitts des Einzelkettenrads 610 der siebten Ausführungsform gezeigt. Jeder der Zähne 612, 614 der ersten und zweiten Zahngruppe weisen in dieser Ausführungsform Gegenlastflanken 640 an einer der jeweiligen Lastflanke 616 in Umfangsrichtung betrachtet entgegengesetzten Seite auf. Die Gegenlastflanke 640 ist dabei jeweils im Wesentlichen symmetrisch zu der zugehörigen Lastflanke 616 des betrachteten Zahns 612, 614 ausgebildet. Diese beidseitige symmetrische Ausbildung gilt gleichermaßen für die flankennahen Aussparungen 618 sowie die Anfasungen 642, die einem verbesserten Eingriff in die Kettenzwischenräume dienen und die Materialstärke des betrachteten Zahns radial nach außen hin reduzieren.

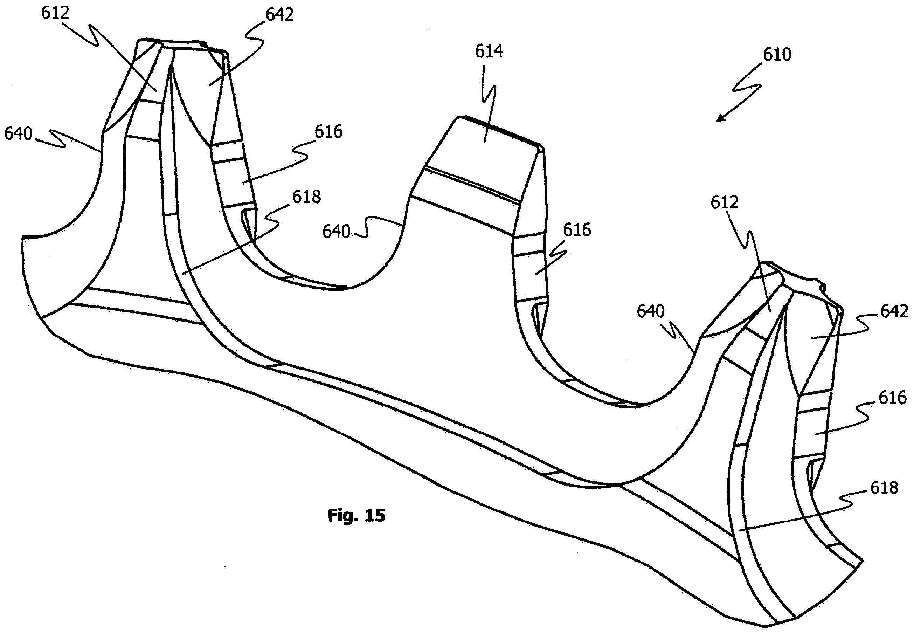

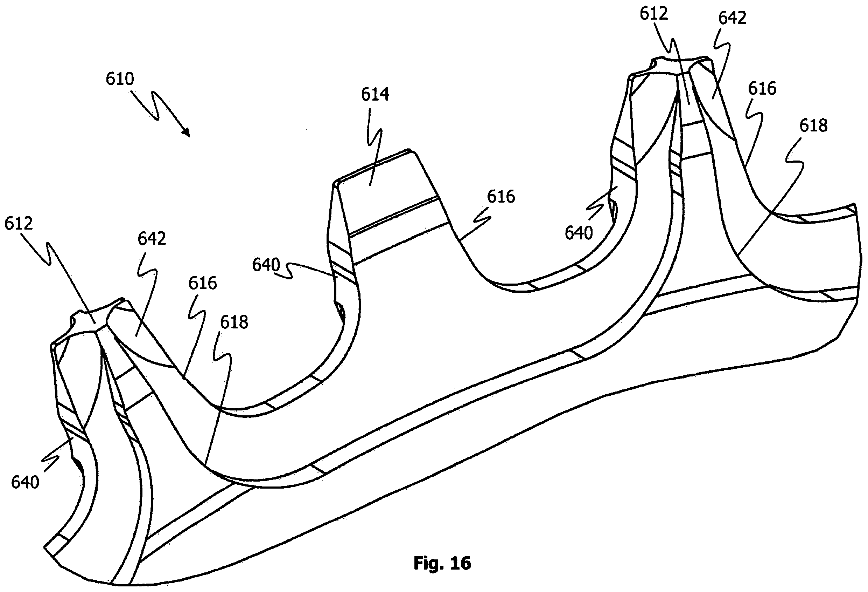

Ein derartiges symmetrisch ausgebildetes Einzelkettenrad 610 ermöglicht eine zeitund kostengünstige Herstellung. Zudem kann ein derartiges Einzelkettenrad 610 beidseitig, d.h. in entgegengesetzte Laufrichtungen verwendet werden. Hat eine Seite des Einzelkettenrads 610, beispielsweise die die Lastflanken 616 aufweisende Seite, eine Verschleißgrenze erreicht, kann es an der Vorderradkurbel des Fahrrads sozusagen spiegelverkehrt ummontiert werden, so dass nach dem Ummontieren die Gegenlastflanken 640 in Wechselwirkung mit den Kettenrollen der Antriebskette treten. Dadurch kann die Lebensdauer des Einzelkettenrads 610 verdoppelt werden. Die Fig. 15 und 16 zeigen den Ausschnitt des symmetrischen Einzelkettenrads 610 jeweils in einer perspektivischen Darstellung.

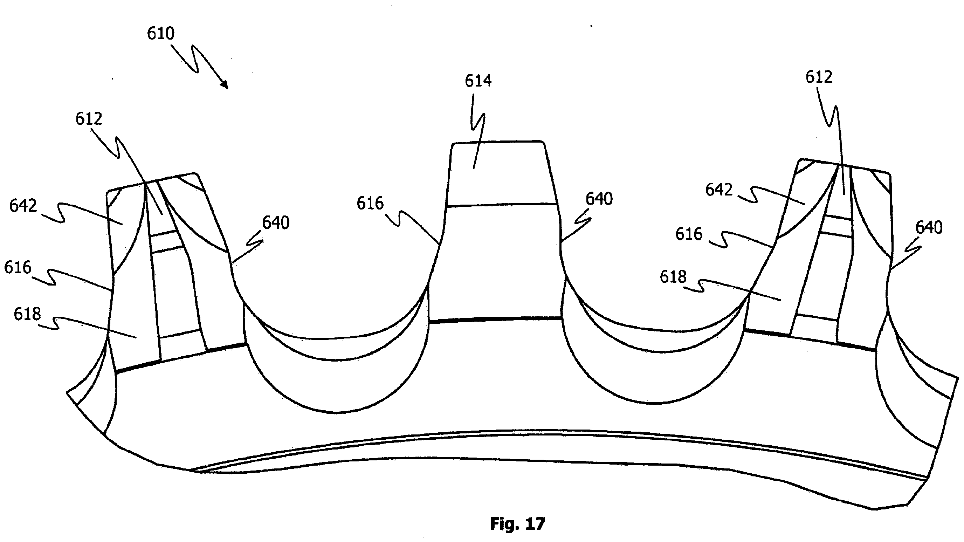

In Fig. 17 ist ebenfalls der in den Fig. 14 bis 16 gezeigte Ausschnitt des Einzelkettenrads 610 gemäß der siebten Ausführungsform in einer Seitenansicht von einer in axialer Richtung betrachtet entgegengesetzten Seite gezeigt.

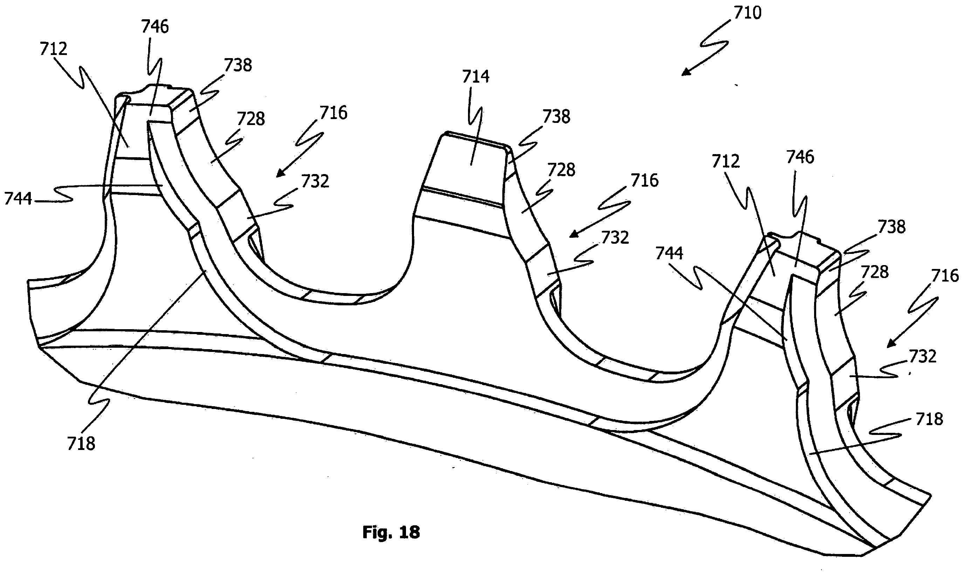

Fig. 18 zeigt einen Ausschnitt eines Einzelkettenrads 710 gemäß einer achten Ausführungsform. Das Einzelkettenrad 710 der achten Ausführungsform entspricht im Wesentlichen der in den Fig. 12 und 13 gezeigten sechsten Ausführungsform, wobei die Zähne 712 der ersten Zahngruppe jeweils einen von oben betrachtet im Wesentlichen kreuz- bzw. plusförmigen Querschnitt aufweisen.

Die Zähne 712 der ersten Zahngruppe umfassen jeweils eine Lastflanke 716 mit einem ersten Lastflankenabschnitt 732, der radial nach innen an eine Ausnehmung 728 angrenzend vorgesehen ist. Die Ausnehmung 728 grenzt radial nach außen an eine Seitenfläche 738 des jeweiligen Zahns 712 der ersten Zahngruppe an. Sowohl der erste Lastflankenabschnitt 732 als auch die Ausnehmung 728 weist dabei eine in Richtung quer zur Umfangsrichtung betrachtet kontinuierliche Breite bzw. Materialstärke auf.

Die Ausnehmung 728 hat dabei dieselbe Wirkungsweise wie die Ausnehmung 528 der sechsten Ausführungsform bzw. die Ausnehmung 428 der fünften Ausführungsform.

Im Unterschied zu der sechsten Ausführungsform weist die Aussparung 718 der achten Ausführungsform einen gegenüber der Lastflanke 716 in Umfangsrichtung betrachtet um eine größere Distanz zurückgesetzten Aussparungsabschnitt 744 auf. Der zurückgesetzte Aussparungsabschnitt 744 erstreckt sich im Wesentlichen benachbart zu der Kontur der Ausnehmung 728 und weist in der gezeigten Darstellung im Wesentlichen dieselbe Distanz gegenüber der Ausnehmung 728 auf, wie die Aussparung 718 gegenüber dem benachbarten ersten Lastflankenabschnitt 732.

Die Materialstärke des zurückgesetzten Aussparungsabschnitts 744 nimmt in Richtung quer zur Umfangsrichtung betrachtet, wie der obere Abschnitt des betrachteten Zahns 712 der ersten Zahngruppe, radial nach außen hin ab. Dabei grenzt der Aussparungsabschnitt 744 in einem oberen Endpunkt des Aussparungsabschnitts 744 radial nach außen an einen Zahnabschnitt 746 an, der keine flankennahe Aussparung umfasst.

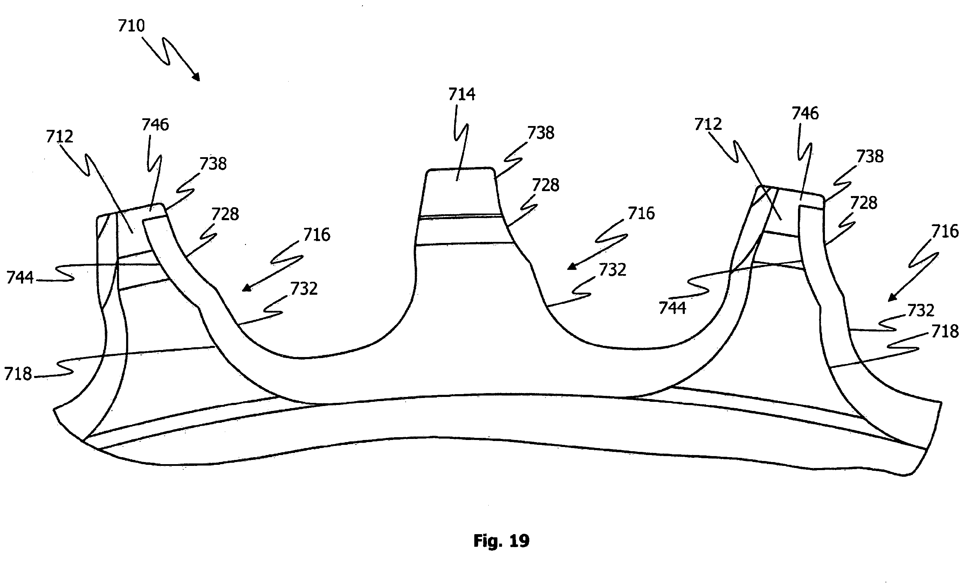

Fig. 19 zeigt eine Seitenansicht des in Fig. 18 gezeigten Ausschnitts des Einzelkettenrads 710 gemäß der achten Ausführungsform.

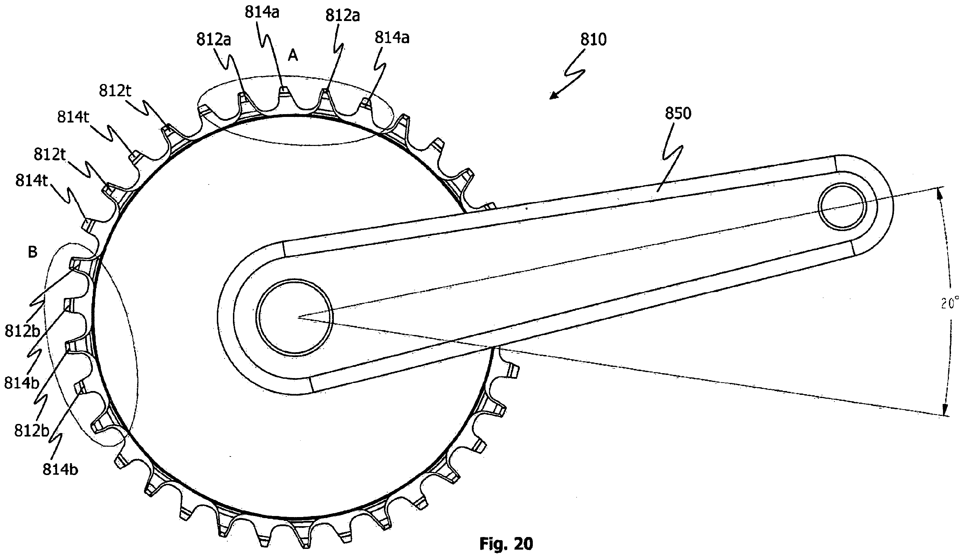

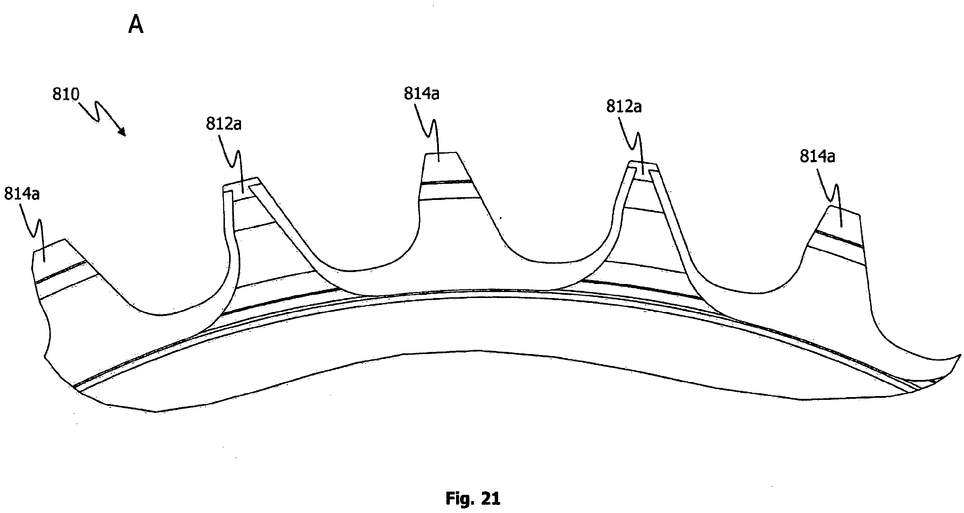

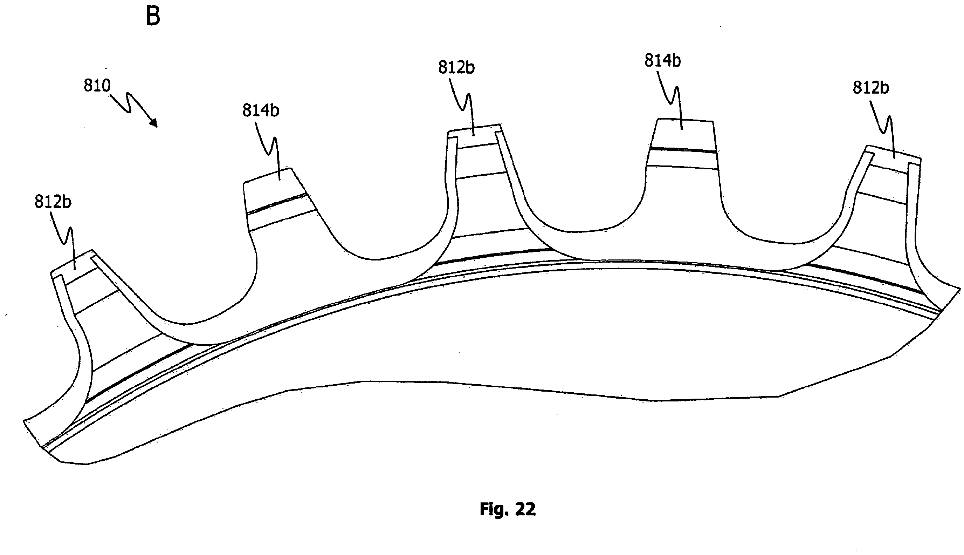

Figuren 20-22 zeigen eine neunte Ausführungsform, deren besondere Merkmale auch unabhängig von den vorangehend beschriebenen Merkmalen, insbesondere von der vorangehend beschriebenen Lastflanken Gestaltung bei konventionellen Einzelkettenrädern zum Einsatz kommen können, beispielsweise bei Einzelkettenrädern mit im wesentlichen konstanter Materialstärke aller Zähne. Bei dieser neunten Ausführungsform weist das Einzelkettenrad Zahnbereiche A und B auf, deren Zähne unterschiedliche Lastflankenwinkel aufweisen. So sind die Zähne 812a und 814a des Zahnbereichs A mit einer flacher verlaufenden Zahnflanke ausgebildet, als die Zähne 812b und 814b des Zahnbereichs B. Man erkennt dies auch bei Vergleich der Figuren 21 und 22, wobei Figur 21 die Zähne des Zahnbereichs A und Figur 22 die Zähne des Zahnbereichs B zeigt. Die Zähne 812a und 814a des Zahnbereichs A und die Zähne 812b und 814b des Zahnbereichs B sind bezüglich ihrer jeweiligen achsenthaltenden Mittelebene im wesentlichen symmetrisch ausgebildet und weisen Merkmale gemäß vorstehender Beschreibung auf, nämlich eine Aussparung parallel zur jeweiligen Zahnflanke im Bereich der Zähne der 812a,b der ersten Zahngruppe und Zähne 814a,b mit reduzierter Materialstärke.

Figur 20 zeigt das Einzelkettenrad 810 in einer Tretkurbelanordnung mit einer Tretkurbel 850. Die Zahnbereiche A, B sind so angeordnet, dass ein Zahnbereich B mit Zähnen 812b und 814b mit den steilen Zahnflanken in dem Bereich liegt, der von der Tretkurbel 850 - in Achsrichtung betrachtet - abgedeckt wird, sowie in dem um 180° dazu versetzten gegenüberliegenden Bereich des Kettenrades 810. Die Zahnbereiche A liegen um jeweils 90° versetzt zu den Zahnbereichen B. Zwischen den beiden Zahnbereichen A und B können Übergangszähne mit Lastflankenwinkeln vorgesehen sein, die betragsmäßig zwischen den Lastflankenwinkeln der Zähne der Zahnbereiche A und B liegen. So ist es möglich, dass ausgehend von den Zähnen 812a und 814a, die relativ flache Lastflankenwinkel im Bereich um 120° aufweisen, Übergangszähne 812t, 814t mit kontinuierlich ansteigendem, d.h. steilerem Lastflankenwinkel vorgesehen sind, wobei der Lastflankenwinkel der Übergangszähne 812t, 814t kleiner ist als der Lastflankenwinkel der Zähne 812b und 814b im Zahnbereich B, der betragsmäßig in einem Bereich um 105° liegt. Wird das Einzelkettenrad 810 auf eine Tretkurbelanordnung montiert, so ist der Zahnbereich A mit Zähnen mit flacheren Lastflankenwinkeln derart positioniert, dass die Kette im Betrieb von diesem Zahnbereich A etwa dann tangential abläuft, wenn gerade eine große Tretkraft von dem Fahrer auf die Tretkurbelanordnung ausgeübt wird, beispielsweise dann, wenn die Tretkurbel in dem gezeigten Winkel von 20° steht.

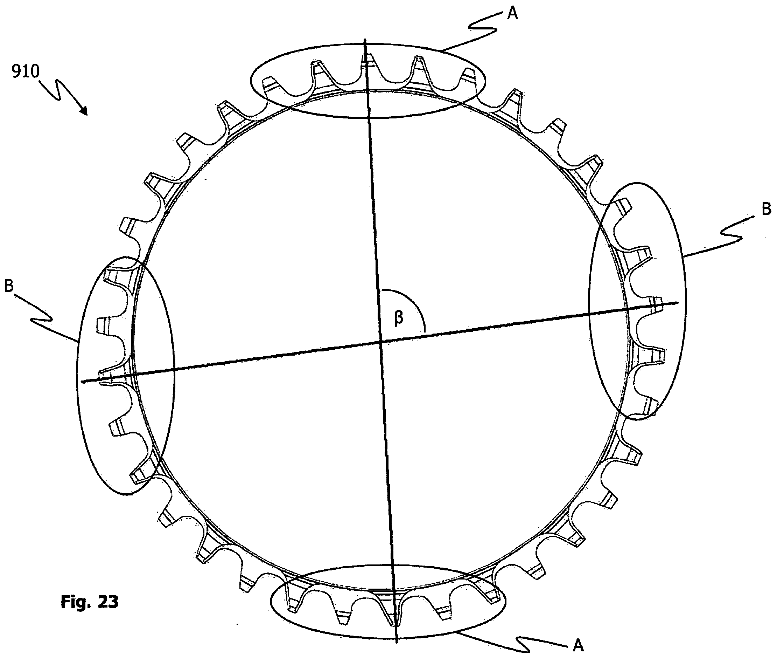

Figur 23 zeigt eine Abwandlung der Ausführungsform gemäß Figuren 20-22, wobei man erkennt, dass bei dem dortigen Einzelkettenrad 910 die Zahnbereiche A und B nicht genau um 90° zueinander versetzt sind, sondern leicht asymmetrisch mit einem Versatzwinkel βbzw. (180°- β) zueinander angeordnet sind, wobei der Versatzwinkel β etwa 85° beträgt.

Die vorhergehenden Ausführungsformen sind nicht erfindungsgemäß und dienen lediglich der Veranschaulichung.

Die Ausführungsform gemäß Figuren 24-26 zeigt ein erfindungsgemäßes Einzelkettenrad 1010, das Zähne 1012, 1014 aufweist, die in ihrer geometrischen Ausgestaltung hinsichtlich der Zahnflanken und der Materialstärke im wesentlichen der Ausgestaltung gemäß der Ausführungsform nach der Figur 14 entsprechen. Allerdings sind bei der Ausführungsform des Einzelkettenrads 1010 die Zähne 1014 der zweiten Zahngruppe in ihrer Höhe in radialer Richtung gegenüber den Zähnen 1012 der ersten Zahngruppe reduziert. Die Höhe der Zähne 1014 beträgt etwa 85 % der Höhe der Zähne 1012. Dadurch kann ein Zustand erreicht werden, bei dem die Zähne 1012 auch bei starker Kettenschrägstellung leichter in die Zwischenräume zwischen die Kettenlaschen eingeführt werden können, wobei verhindert wird, dass die Kettenlaschen jeweils auf die nach radial außen weisende Fläche des jeweiligen Zahnkopfes treffen. Stattdessen wird durch diese Gestaltung erreicht, dass die Zähne und die Kettenlaschen immer so in Kontakt treten, dass die Kettenlaschen seitlich an der Zahnfläche abgleiten, wenn die Kette in Eingriff mit dem jeweiligen Zahn gelangt.

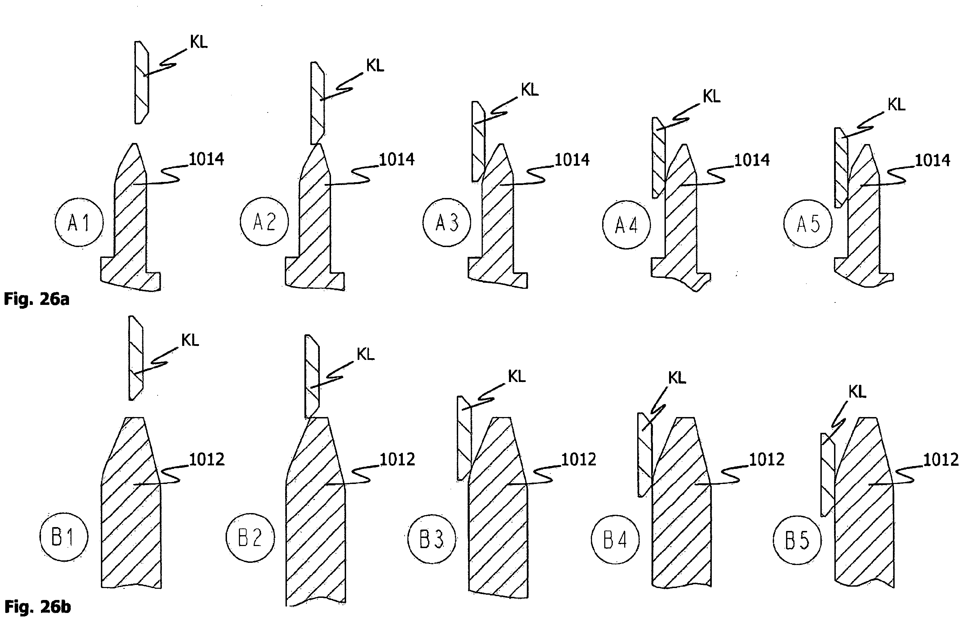

Dies ist in der Schnittdarstellung Darstellung gemäß Figur 26a für die Phasen A1 bis A5 für die dünnen Zähne 1014 der zweiten Zahngruppe gezeigt und in der Schnittdarstellung gemäß Figur 26b für die Phasen B1 bis B5 für die Materialstärke Rennszene 1012 der ersten Zahngruppe. Man erkennt in Figur 26a, dass sich die im Querschnitt gezeigte Kettenlasche KL von oben dem Zahn 1014 annähert (A1), dann bei weiterer Rotation des Einzelkettenrades die Kettenlaschen KL mit einer Fase mit dem angeschrägten Zahnkopf des Zahns 1014 seitlich in Kontakt kommt (A2), in der Folge an dem angeschrägten Zahnkopf des Zahns 1014 abgleitet (A3), bis es in Anlage an der im wesentlichen geradlinig verlaufenden Seitenfläche des Zahns 1014 geführt wird (A4) und schließlich in einen Zustand des maximalen Eingriffs zwischen dem Zahn 1014 und der Kette im Bereich der Kettenlasche KL gelangt (A5).

Dieselben Phasen stellen sich dann in der Folge ein, wenn das Einzelkettenrad weiter rotiert und die nächste Kettenlasche KL in Eingriff mit dem folgenden Zahn 1012 der ersten Zahngruppe mit größerer Materialstärke gelangt. Dies ist in Figur 26b gezeigt. Man erkennt in Figur 26b, dass sich die im Querschnitt gezeigte Kettenlasche KL von oben dem Zahn 1012 annähert (B1), dann bei weiterer Rotation des Einzelkettenrades die Kettenlaschen KL mit einer Fase mit dem angeschrägten Zahnkopf des Zahns 1012 seitlich in Kontakt kommt (B2), in der Folge an dem angeschrägten Zahnkopf des Zahns 1012 abgleitet (B3), bis es in Anlage an der im wesentlichen geradlinig verlaufenden Seitenfläche des Zahns 1012 geführt wird (B4) und schließlich in einen Zustand des maximalen Eingriffs zwischen dem Zahn 1012 und der Kette im Bereich der Kettenlasche KL gelangt (B5).

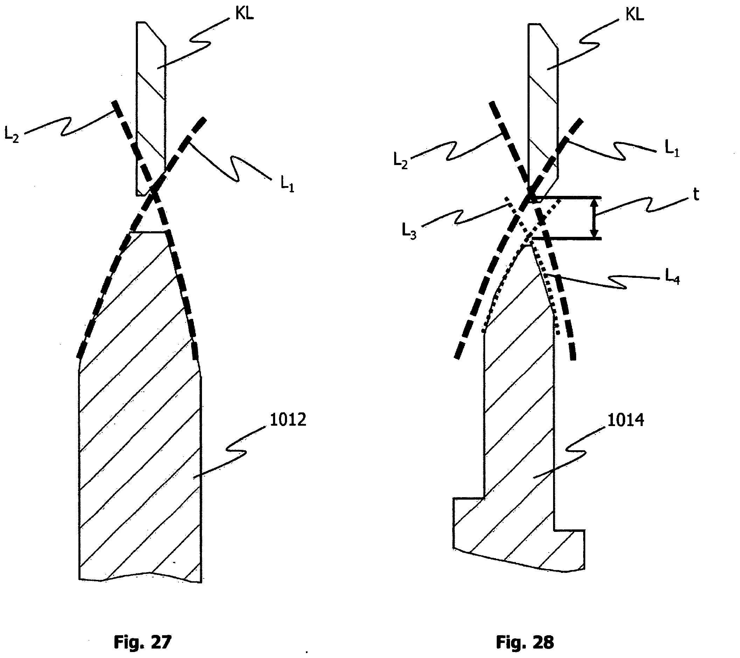

Figuren 27 und 28 zeigen schematisch für diese Ausführungsform einen Weg, die optimale Zahnhöhe und Geometrie im Bereich des Zahnkopfes zu bestimmen, wobei Figur 27 den Fall der Zähne 1012 der ersten Zahngruppe und Figur 28 den Fall der Zähne 1014 der zweiten Zahngruppe zeigt. Die strichlinierten Linien in Figur 27 zeigen nach Maßgabe des Verlaufs der Kettenlaschen KL im Betrieb die höchstmögliche Zahngeometrie. Der Schnittpunkt der beiden strichlinierten Linien L₁ und L₂ in Figur 27 bezeichnet sozusagen den höchstmöglichen Punkt eines Zahnkopfes eines Zahnes 1012 der ersten Zahngruppe, um ein zuverlässiges Eingreifen des Zahnes in einen Kettenzwischenraum selbst bei starkem Kettenversatz, wie er im Betrieb eines Fahrrads auftreten kann, zu gewährleisten. Es sei daran erinnert, dass der Kettenversatz aus einer Schrägstellung der Kette resultiert, die sich dadurch ergibt, dass am Hinterrad die Kette auf unterschiedliche Ritzel eines Ritzelsatzes aufgelegt sein kann. Nach Maßgabe der strichlinierten Linien L₁ und L₂ in Figur 27 wird die Geometrie des Zahnkopfes und dessen Höhe ausgebildet.

Figur 28 zeigt dieselbe Situation für einen Zahn 1014 der zweiten Zahngruppe. Wiederum zeigen die strichlinierten Linien L₁ und L₂ die Situation für den benachbarten Zahn 1012 der ersten Zahngruppe und die punktierten Linien L₃ und L₄ die Situation für den Zahn 1014 der zweiten Zahngruppe. Daraus ergibt sich der minimale Höhenunterschied t zwischen den Zähnen 1012 von 1014, um die Zahnanordnung hinsichtlich der Versatzsituation der Kette zu optimieren.

Die folgenden Ausführungsformen sind nicht erfindungsgemäß und dienen lediglich der Veranschaulichung.

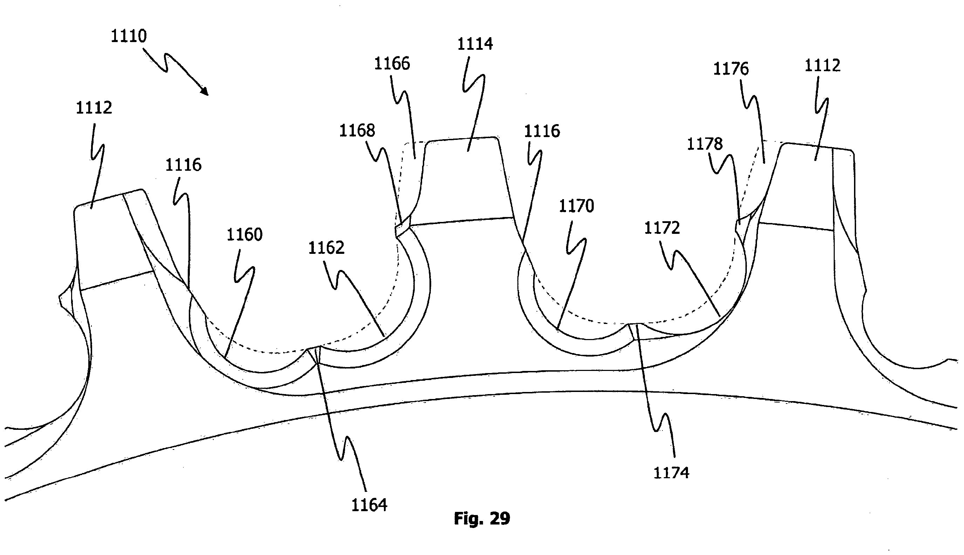

Figuren 29-31 zeigen eine weitere Ausführungsform für ein Einzelkettenrad 1110. Auch dieses weist Zähne 1112 der ersten Zahngruppe und Zähne 1114 der zweiten Zahngruppe auf. Die Zahnflanken der Zähne 1112 der ersten Zahngruppe der Ausführungsform gemäß Figur 14 gestaltet mit den folgenden wesentlichen Unterschieden:
Ausgehend von dem in Figur 29 gezeigten linken Zahn 1112 sind im Bereich des Zahngrundes zwei kreisbogenförmig ausgeführte angefaste Einschnitte 1160, 1162 vorgesehen. Der Radius dieser Kreisbögen ist deutlich kleiner gewählt, als der Radius einer eingreifenden Kettenrolle. Dadurch ergibt sich eine Geometrie mit einem Lastflankenabschnitt 1116, an den sich im Bereich des Zahngrundes bzw. Zahnzwischenraums die beiden Ausnehmungen 1160, 1162 anschließen, die zwischen sich einen Anlageabschnitt 1164 einschließen. Auch der Zahnkopf des in Figur 29 darauffolgenden mittleren Zahns 1114 der zweiten Zahngruppe weist einen ausgenommenen Bereich 1166 auf, so dass zusammen mit der Ausnehmung 1162 ein weiterer Anlageabschnitt 1168 entsteht. Ausgehend von dem Zahn 1114 sind dann im darauf folgenden Zahnzwischenraum wiederum zwei angefaste kreisbogenförmige Ausnehmungen 1170 und 1172 vorgesehen, die zwischen sich einen Anlageabschnitt 1174 ausbilden. Auch der Zahn 1112 weist in seinem Zahnkopf eine zusätzliche Ausnehmung 1176 auf, die zusammen mit der Ausnehmung 1172 zu einem weiteren Anlageabschnitt 1178 führt. Diese Anordnung setzt sich entlang des Außenumfangs des Einzelkettenrads 1110 fort.

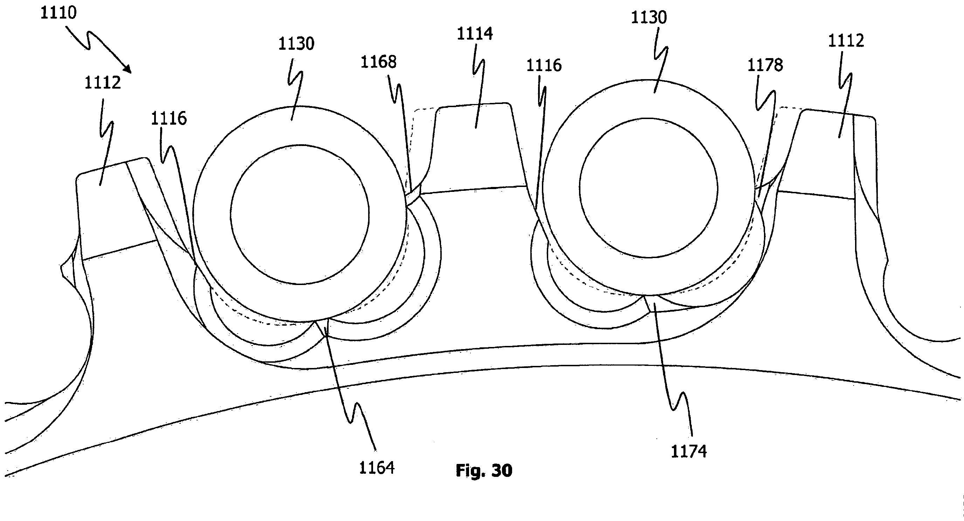

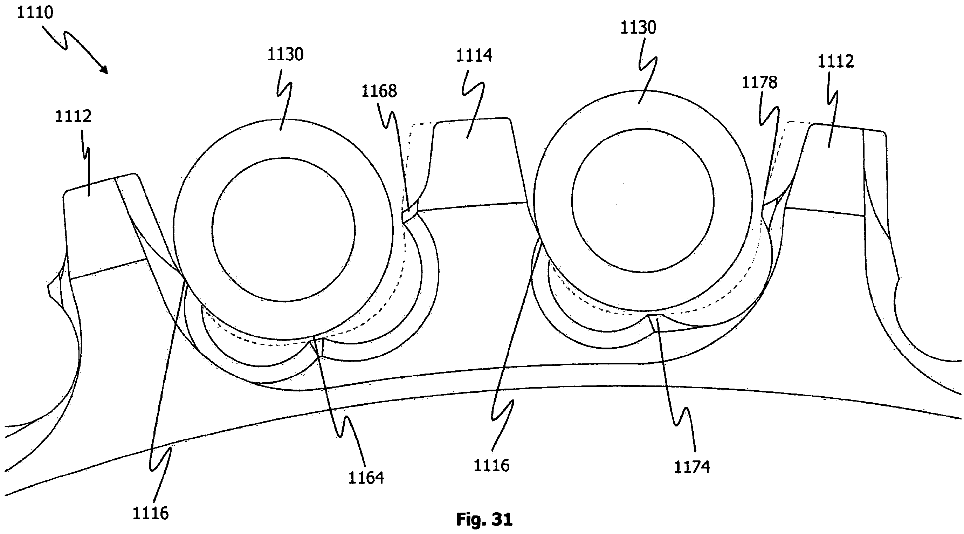

Diese Ausführungsform zeigt die vorstehend beschriebenen Vorteile hinsichtlich der geringen Verschleißanfälligkeit durch die besondere Ausgestaltung der Lastflanke 1116, wobei zusätzlich die einzelnen Kontaktpunkte 1164, 1168, 1174, 1178 dafür sorgen, dass aufgrund der dort auftretenden lokalen Lasten etwaige Verschmutzungen im Bereich des Einzelkettenrads 1110 durchdrungen und verdrängt werden und so gewährleistet werden kann, dass die Kette in gewünschter Weise an die Lastflanke herangeführt wird. Dies ist in den Figuren 30 und 31 gezeigt, wobei dem Zustand gemäß Figur 30 die Kettenrolle 1130 gerade in die Zahnzwischenräume eingreift und noch keine Lastübertragung erfolgt und wobei der Zustand gemäß Figur 31 einen Zustand darstellt, bei dem gerade eine Lastübertragung von den Kettenrollen 1130 auf die Zähne erfolgt.

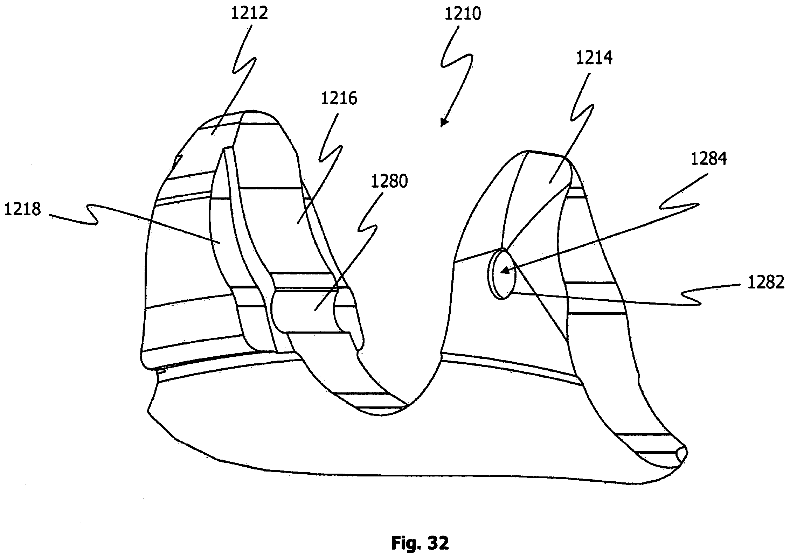

Figur 32-34 zeigen eine weitere Ausführungsform, die mit den vorangehenden Ausführungsformen beliebig kombinierbar ist. Bei dieser Ausführungsform ist ein Einzelkettenrad 1210 mit Verschleißindikatoren ausgebildet. Figur 32 zeigt in perspektivischer Darstellung lediglich zwei Zähne dieses Einzelkettenrads 1210, nämlich einen materialstärkeren Zahn 1212 der ersten Zahngruppe und einen schmäleren Zahn 1214 der zweiten Zahngruppe. Die Ausbildung der Lastflanke 1216 sowie der Aussparung 1218 entspricht den vorangehend beschriebenen Merkmalen.

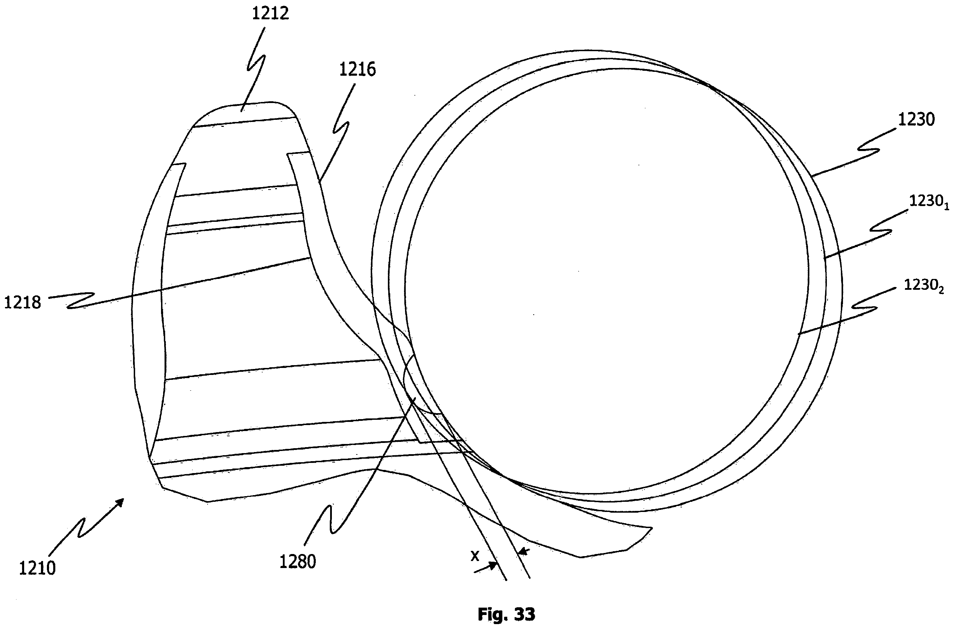

Diese Ausführungsform unterscheidet sich jedoch von den vorangehend beschriebenen Merkmalen dadurch, dass in der Lastflanke 1216 eine Ausnehmung 1280 vorgesehen ist. Diese Ausnehmung 1280 kann beliebige Kontur und Tiefe aufweisen. Im gezeigten Beispielsfall ist sie in der Seitenansicht mit einer kreisförmigen Kontur ausgebildet, deren Radius erheblich kleiner ist als der Radius einer an der Lastflanke anliegenden Kettenrolle. Beispielsweise kann der Radius der Ausnehmung 1280 ¹/₁₀ des Radius der Kettenrolle betragen. Die Ausnehmung 1280 ist in einem Bereich der Lastflanke 1216 angeordnet, in dem im Betrieb die Kettenrolle kraftübertragend und damit verschleißend angreift. Dies ist in Figur 33 erkennbar, in der der Zahn 1212 in der Seitenansicht gezeigt ist, und eine Kettenrolle 1230 durch einen Kreis in verschiedenen verschleißabhängigen Positionen dargestellt ist. schließlich erkennt man, dass sich die Ausnehmung 1280 über die gesamte Zahntiefe (Materialstärke) erstreckt. Dies ist eine Variante. Es ist aber auch alternativ möglich, dass sich die Ausnehmung 1280 nur teilweise entlang des Zahns über einen Teil der Zahntiefe (Materialstärke) erstreckt, beispielsweise nur entlang eines Drittels oder der Hälfte des Zahns.

Mit zunehmendem Verschleiß an der Lastflanke 1216 gräbt sich die Kettenrolle 1230 über eine teilweise verschlissene Position 1230₁ immer weiter in die Lastflanke 1216 ein, bis schließlich die maximal verschlissene Position 1230₂ erreicht wird, so dass die Kettenrolle an der tiefsten Stelle der Ausnehmung 1280 anliegt. Die umliegenden Materialbereiche der Lastflanke 1216 sind in diesem maximal verschlissenen Zustand vollständig abgetragen. Es ist der maximale Verschleiß erreicht, der in Figur 33 durch das Maß x angegeben ist. Der Benutzer des Kettenrads 1210 erkennt also anhand des jeweiligen Bestands der Ausnehmung 1280 und der verfügbaren verbleibenden Tiefe den aktuellen Verschleißzustand des Kettenrads 1210.

Die Ablesbarkeit eines durch die Ausnehmung 1280 gebildeten Verschleißindikators kann dadurch verbessert werden, dass die in der Seitenansicht gemäß Figur 33 um die Ausnehmung 1280 umliegenden Materialbereiche durch besondere kontrastreiche Farbgebung oder die Oberfläche der Ausnehmung 1082 selbst kontrastreich gekennzeichnet werden, beispielsweise durch Eloxieren oder andere dauerhafte Oberflächenbehandlungen.

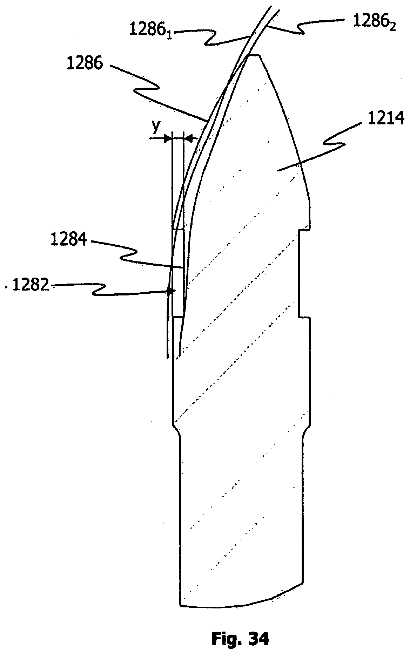

Figur 34 zeigt eine Schnittansicht durch den Zahn 1214 der zweiten Zahngruppe. Wie man in den Figuren 32 und 34 erkennt, weist dieser Zahn an seiner Seitenfläche in einem Bereich, in dem die Kettenlaschen im Betrieb reibend angreifen, eine kreisförmige Vertiefung 1282 auf. Auch diese Vertiefung dient als Verschleißindikator, wobei ihre Grundfläche 1284 durch besondere kontrastreiche Farbgebung, beispielsweise durch Eloxieren oder andere dauerhafte Oberflächenbehandlungen, besonders gekennzeichnet ist.

Das Funktionsprinzip ist dasselbe, wie vorangehend für die Ausnehmung 1280 beschrieben. Mit zunehmendem Verschleiß wird verändert sich die Kontur 1286 des Zahnes 1214 von dem Ausgangszustand über einen teilweise verschlissenen Zustand, der durch die Konturlinie 1286₁ gekennzeichnet ist, hin zu einem vollständig verschlissenen Zustand, der durch die Konturlinie 1286₂ gekennzeichnet ist. Ist dieser vollständig verschlissene Zustand erreicht, so ist das um die Vertiefung 1282 herumliegende Material des Zahns 1214 bis auf den Grund 1284 der Vertiefung 1282 abgetragen. Es ist dann der maximale Verschleiß y erreicht. Auch dies ist ein erkennbarer Indikator für den Zahnverschleiß.

Es versteht sich, dass die beiden Verschleißindikatoren 1280 und 1282 gemeinsam aber auch über separat an Einzelkettenrädern 1210 oder anderer Bauart eingesetzt werden können. Beide Verschleißindikatoren, die Ausnehmung 1280 einerseits und die Ausnehmung 1282 andererseits, machen es möglich, einem Benutzer den aktuellen Verschleiß des Einzelkettenrads 1210 anzuzeigen und das Erreichen eines maximalen Verschleißzustandes zu erkennen, bei dem er das Einzelkettenrad dann durch ein neues Einzelkettenrad ersetzen oder - bei im wesentlichen symmetrischer Zahngestaltung - durch spiegelverkehrtes Ummontieren, wie vorstehend beschrieben, weiter nutzen kann.

## Patentansprüche

1. Einzelkettenrad (1010) für eine Fahrradvorderkurbelanordnung zum Eingreifen in eine Antriebskette, das eine an einem Umfang des Einzelkettenrads (1010) ausgebildete Vielzahl von Zähnen (1012, 1014) umfasst, die eine erste und eine zweite Zahngruppe aufweist, wobei die Zähne (1014) der zweiten Zahngruppe alternierend zwischen den Zähnen (1012) der ersten Zahngruppe angeordnet sind, so dass in Umfangsrichtung des Einzelkettenrads (1010) betrachtet auf einen Zahn (1012) der ersten Zahngruppe unmittelbar ein Zahn (1014) der zweiten Zahngruppe und darauf wiederum unmittelbar ein Zahn (1012) der ersten Zahngruppe folgt,
wobei die Zähne (1012) der ersten Zahngruppe in Richtung quer zur Umfangsrichtung des Einzelkettenrads (1010) betrachtet eine größere Materialstärke als die Zähne (1014) der zweiten Zahngruppe aufweisen,
wobei jeder Zahn (1012, 1014) eine Lastflanke (16) aufweist, über die eine Kraftübertragung zwischen einer daran anliegenden Kettenrolle (30) der Antriebskette und dem jeweiligen Zahn (1012, 1014) erfolgen kann, und wobei jeder Zahn (1012) der ersten Zahngruppe wenigstens eine Profilierung mit einer flankennahen Aussparung (18) aufweist, in die ein über die Kettenrolle (30) hinaus stehender Abschnitt einer Innenlasche der Antriebskette eingreifen kann, wobei die Lastflanke (16) und die Profilierung wenigstens eines Zahns (12) der ersten Zahngruppe geometrisch derart gestaltet und zueinander angeordnet sind, dass auch bei verschleißinvolvierender Beanspruchung der Lastflanke (16) infolge der Kraftübertragung über die Kettenrollen (30) der Antriebskette im Betrieb des Einzelkettenrades (10) ein ungehindertes Außereingriffgelangen der jeweiligen an der Lastflanke (16) anliegenden Kettenrolle (30) und dem Zahn (12) gewährleistet ist, **dadurch gekennzeichnet, dass** die Zähne (1014) der zweiten Zahngruppe in radialer Richtung des Einzelkettenrads (1010) mit geringerer Höhe ausgebildet sind als die Zähne (1012) der ersten Zahngruppe, wobei die Zähne (1014) der zweiten Zahngruppe eine Höhe von etwa 85 % der Höhe der Zähne (1012) der ersten Zahngruppe aufweisen.

2. Einzelkettenrad (1010) nach Anspruch 1, **dadurch gekennzeichnet, dass** die Zähne (1014) der zweiten Zahngruppe eine Höhe von maximal 90 % der Höhe der Zähne (1012) der ersten Zahngruppe aufweisen.

3. Fahrradvorderkurbelanordnung, die einen Kurbelarm und ein Einzelkettenrad aufweist, das an dem Kurbelarm angebracht ist, **gekennzeichnet durch** ein Einzelkettenrad nach einem der vorangehenden Ansprüche.

## Claims

1. Individual chain wheel (1010) for a bicycle front crank arrangement for engaging in a drive chain, said individual chain wheel comprising a multiplicity of teeth (1012, 1014) formed on a circumference of the individual chain wheel (1010) and having a first and a second group of teeth, wherein the teeth (1014) of the second group of teeth are arranged in an alternating manner between the teeth (1012) of the first group of teeth, such that, as viewed in the circumferential direction of the individual chain wheel (1010), a tooth (1012) of the first group of teeth is directly followed by a tooth (1014) of the second group of teeth and then in turn immediately by a tooth (1012) of the first group of teeth,
wherein the teeth (1012) of the first group of teeth, as viewed in a direction transversely with respect to the circumferential direction of the individual chain wheel (1010), have a greater material thickness than the teeth (1014) of the second group of teeth,
wherein each tooth (1012, 1014) has a load flank (16) via which a force can be transmitted between an adjacent chain pulley (30) of the drive chain and the respective tooth (1012, 1014), and wherein each tooth (1012) of the first group of teeth has at least one profiling with an opening (18) in the vicinity of the flank, in which a portion of an inner link plate of the drive chain, which portion protrudes beyond the chain pulley (30), can engage, wherein the load flank (16) and the profiling of at least one tooth (12) of the first group or teeth are geometrically designed and arranged with respect to each other in such a manner that, even in the event of wear-involving stressing of the load flank (16) as a consequence of the transmission of force via the chain pulleys (30) of the drive chain during operation of the individual chain wheel (10), an unobstructed disengagement of the respective chain pulley (30) adjacent to the load flank (16) and of the tooth (12) is ensured, **characterized in that** the teeth (1014) of the second group of teeth in the radial direction of the individual chain wheel (1010) are formed with a lower height than the teeth (1012) of the first group of teeth, wherein the teeth (1014) of the second group of teeth have a height of approximately 85% of the height of the teeth (1012) of the first group of teeth.

2. Individual chain wheel (1010) according to Claim 1, **characterized in that** the teeth (1014) of the second group of teeth have a height of at maximum 90% of the height of the teeth (1012) of the first group of teeth.

3. Bicycle front crank arrangement which has a crank arm and an individual chain wheel which is attached to the crank arm, **characterized by** an individual chain wheel according to either of the preceding claims.

## Revendications

1. Pignon simple (1010) pour un agencement de manivelle avant de bicyclette, destiné à venir en prise avec une chaîne d'entraînement et qui comprend une pluralité de dents (1012, 1014), réalisée sur une circonférence du pignon simple (1010), qui présente un premier et un deuxième groupe de dents, les dents (1014) du deuxième groupe de dents étant disposées en alternance entre les dents (1012) du premier groupe de dents de sorte que, vue dans la direction circonférentielle du pignon simple (1010), une dent (1012) du premier groupe de dents est suivie directement d'une dent (1014) du deuxième groupe de dents, et celle-ci est suivie à son tour directement d'une dent (1012) du premier groupe de dents, les dents (1012) du premier groupe de dents, vues dans la direction transversale à la direction circonférentielle du pignon simple (1010), présentent une plus grande épaisseur de matériau que les dents (1014) du deuxième groupe de dents, chaque dent (1012, 1014) présentant un flanc de charge (16) par lequel une transmission de force peut avoir lieu entre un rouleau de chaîne (30), appliqué contre celui-ci, de la chaîne d'entraînement et la dent respective (1012, 1014), et chaque dent (1012) du premier groupe de dents présentant au moins un profilage doté d'un évidement près du flanc (18) dans lequel une partie dépassant du rouleau de chaîne (30) d'une patte intérieure de la chaîne d'entraînement peut venir en prise, le flanc de charge (16) et le profilage d'au moins une dent (12) du premier groupe de dents étant configurés géométriquement et disposés l'un par rapport à l'autre de telle sorte que même dans le cas d'une sollicitation impliquant de l'usure du flanc de charge (16) suite à la transmission de force par les rouleaux de chaîne (30) de la chaîne d'entraînement en cours de fonctionnement du pignon simple (10), une mise hors prise sans entraves du rouleau de chaîne (30) respectif appliqué contre le flanc de charge (16) et de la dent (12) est assurée,
**caractérisé en ce que** les dents (1014) du deuxième groupe de dents sont réalisées dans la direction radiale du pignon simple (1010) d'une hauteur inférieure à celle des dents (1012) du premier groupe de dents, les dents (1014) du deuxième groupe de dents présentant une hauteur d'environ 85 % de la hauteur des dents (1012) du premier groupe de dents.

2. Pignon simple (1010) selon la revendication 1, **caractérisé en ce que** les dents (1014) du deuxième groupe de dents présentent une hauteur d'un maximum de 90 % de la hauteur des dents (1012) du premier groupe de dents.

3. Agencement de manivelle avant de bicyclette qui présente un bras de manivelle et un pignon simple qui est fixé au bras de manivelle, **caractérisé par** un pignon simple selon l'une quelconque des revendications précédentes.
